Europäisches Patentamt

European Patent Office

Office européen des brevets

(11) Veröffentlichungsnummer: **0 283 575 B1**

## (12) EUROPÄISCHE PATENTSCHRIFT

(45) Veröffentlichungstag der Patentschrift: **05.08.92**

(51) Int. Cl.⁵: **H02G 1/08**, H02G 3/06

(21) Anmeldenummer: **87118468.5**

(22) Anmeldetag: **14.12.87**

(54) **Winkelförmige Leitungseinführung.**

(30) Priorität: **26.03.87 DE 3709963**

(43) Veröffentlichungstag der Anmeldung:
**28.09.88 Patentblatt 88/39**

(45) Bekanntmachung des Hinweises auf die
Patenterteilung:
**05.08.92 Patentblatt 92/32**

(84) Benannte Vertragsstaaten:
**CH DE FR IT LI**

(56) Entgegenhaltungen:
**EP-A- 0 151 273**
**DE-C- 836 678**
**FR-A- 2 347 759**

(73) Patentinhaber: **Anton Hummel Verwaltungs-
GmbH
Mozartstrasse 2
W-7808 Waldkirch(DE)**

(72) Erfinder: **Gehring, Peter
Eichhofweg
W-7809 Simonswald-Griesbach(DE)**

(74) Vertreter: **Schmitt, Hans, Dipl.-Ing. et al
Patentanwälte Dipl.-Ing H. Schmitt Dipl.-Ing.
W. Maucher Dreikönigstrasse 13
W-7800 Freiburg(DE)**

## Beschreibung

Die Erfindung betrifft eine winkelförmige Leitungseinführung, insbesondere Rohrkrümmer zum Einführen von elektrischen Leitungen, Schläuchen oder Kabeln unter einem Winkel in ein Gehäuse od.dgl., wobei das Kabel od.dgl. schräg oder parallel zur Gehäuseoberfläche verläuft und etwa rechtwinklig oder schräg in dieses eintritt und wobei der Biegebereich des Kabels od.dgl. von einer Innenhöhlung der Leitungseinführung umschlossen ist, im Winkelbereich der Leitungseinführung eine Trennstelle zwischen den beiden Schenkeln der Leitungseinführung vorgesehen ist und die beiden Schenkel in ihrer einen Winkel bildenden Gebrauchslage zur Fixierung dieses Winkels an wenigstens einer Verbindungsstelle verbindbar, vorzugsweise verrastbar sind.

Eine derartige winkelförmige Leitungseinführung ist in mehreren Ausführungsformen aus dem deutschen Patent 34 03 772 bekannt. Eine aus diesem Patent vorbekannte Lösung besteht dabei darin, daß die beiden Schenkel an der Außenseite des von ihnen gebildeten Winkels schwenkbar und/oder lösbar verbunden und an der Innenseite des Winkels lösbar verbindbar sind, also an dieser Innenseite des Winkels eine Verbindungsstelle haben. Eine andere Lösung dieses Patentes sieht vor, daß die beiden Schenkel voneinander getrennt zusammen mit einem durchsetzenden Kabel od.dgl. schwenkbar und in Schwenklage, in welcher sie einen Winkel bilden, verbindbar und festlegbar sind.

Da die zum Fixieren der Winkellage vorgesehene Verbindungsstelle bei diesen bekannten Leitungseinführungen an der Innenseite des Winkels angeordnet ist, wird an dieser Stelle entsprechend viel Platz benötigt. Somit muß der etwa parallel zur Gehäuseoberfläche verlaufende Winkelschenkel von der Gehäuseoberfläche einen entsprechend großen Abstand einhalten, um praktisch um diese Verbindungsstelle herumgeführt werden zu können. Diese an der Innenseite des Winkels vorgesehene Verbindungsstelle ist jedoch die nächstliegende Lösung, wenn gleichzeitig an der Außenseite des Winkels eine Verrastung oder Schwenkverbindung vorgesehen ist.

Es besteht deshalb die Aufgabe, eine Leitungseinführung der eingangs erwähnten Art zu schaffen, bei welcher die Vorteile erhalten bleiben, daß ein genau vorgegebener Winkel sicher eingehalten wird, dabei auch Querkräfte aufgenommen werden können, dennoch das Einführen eines Kabels od.dgl. erleichtert ist, selbst wenn sein Querschnitt fast oder ganz dem Innenquerschnitt der Leitungseinführung entspricht und zusätzlich der Abstand des etwa parallel zu einer Gehäuseoberfläche verlaufenden Winkelschenkels von dieser Gehäuseoberfläche vermindert werden kann. Dennoch soll die Verbindung der beiden Schenkel in ihrer winkelförmigen Gebrauchslage einfach und sicher durchführbar sein.

Die Lösung dieser scheinbar widersprüchlichen Aufgabe besteht im wesentlichen darin, daß die Verbindungsstelle(n) zum Fixieren der Winkellage seitlich von der Innenseite des Winkels angeordnet ist(sind). Somit bleibt die vorteilhafte Lösung erhalten, daß ein Kabel od.dgl. zunächst geradlinig durch die beiden Schenkel hindurchgezogen wird, wonach dann die Relativverschwenkung der beiden Schenkel und ihre Fixierung in Winkellage erfolgen kann. Gleichzeitig wird aber erreicht, daß der in Gebrauchslage etwa parallel zu einer Gehäuseoberfläche verlaufende Winkelschenkel wesentlich näher an dieser Oberfläche zu liegen kommen kann, weil entgegen der nächstliegenden Lösung der entsprechende Verschluß nicht mehr an der Innenseite des Winkels, sondern seitlich dieser Innenseite angeordnet ist. Es ergibt sich somit eine platzsparende Anordnung, die unter beengten Verhältnissen vorteilhaft ist, wobei dazu die entsprechenden Verbindungsstellen an einer ungewöhnlichen Stelle der Leitungseinführung zu plazieren sind. Die Erfindung besteht also darin, die Zuführung eines Kabels od.dgl. zu einer Gehäuseeinführung möglichst nahe an dessen Oberfläche und somit sehr platzsparend zu verlegen, und dazu von der eigentlich naheliegenden Anordnung der Verbindungsstelle der Schenkel einer winkelförmigen Leitungseinführung abzugehen und die Verbindungsstelle entgegen den vorbekannten und nächstliegenden Lösungen nicht dort anzubringen, wo sie von den auftretenden Kräften her eigentlich am günstigsten wären, sondern sie seitlich des inneren Winkels der beiden Winkelschenkel ihrer Gebrauchslage anzuordnen, so daß die Innenhöhlung des parallel zur Gehäusewand laufenden Schenkels teilweise auf der Höhe der Verbindung liegen kann.

Besonders zweckmäßig ist es dabei für die Herstellung und die möglichst platzsparende Ausbildung der gesamten Leitungseinführung wenn die Verbindungsstelle(n) der beiden Winkelschenkel in ihrer Gebrauchslage in einer Ebene angeordnet ist(sind), die durch die am weitesten gegenüber der Längsmitte der Leitungseinführung außenliegende Begrenzung der Winkelschenkel aufgespannt ist, oder die etwa tangential zu den im Winkel stehenden Innenhöhlungen der im Winkel angeordneten Schenkel verläuft, oder die sich zwischen diesen beiden Ebenen befindet. Dadurch wird erreicht, daß für die Anordnung der Verbindungsstellen keine Veränderung der Außenabmessung der Leitungseinführung erforderlich wird. Ein weiterer Vorteil dieser Maßnahme besteht darin, daß die Verschlußkräfte und vom Kabel eventuell ausgehende Kräfte gut und einfach in die Gehäusewandungen der Leitungseinführung eingeleitet werden können. Außerdem sind in der Regel die Wandstärken solcher Leitungseinführungen genügend groß, um innerhalb ihres Querschnittes entsprechende Verbindungsstellen, Rastvorrichtungen oder Verschlüsse unterbringen zu können.

Besonders zweckmäßig ist es dabei, wenn beidseits der Längsmittelebene der in Gebrauchslage befindlichen Winkelschenkel jeweils eine außenliegende Verbindungsstelle zum Festlegen der Winkelposition vorgesehen ist, wobei die beiden Verbindungsstellen vorzugsweise symmetrisch zu der Längsmittelebene angeordnet sind. Dadurch wird die Krafteinleitung noch günstiger und stabiler und die Innenhöhlung und das Kabel können sogar teilweise zwischen den Verbindungsstellen angeordnet werden. Eine günstige und vorteilhafte Ausgestaltung der Erfindung bei einer Leitungseinführung mit zumindest an ihren Mündungen im Querschnitt etwa kreisförmigen Innenhöhlungen - was in der Mehrzahl der Fälle erfüllt sein dürfte - kann darin bestehen, daß zumindest das die Innenhöhlung eines Winkelschenkels umschließende Gehäuse an seiner etwa tangential zu der Innenhöhlung und parallel zur Längsmitte verlaufenden Wandung in den Bereich der Innenseite des Winkels verlängert und mit Verbindungsmitteln zum Verrasten und/oder Verriegeln der beiden Winkelschenkel versehen ist. Es ergibt sich dann eine sehr kompakte Leitungseinführung, die an der Außenseite praktisch nicht mehr winklig gestaltet ist, sondern nahezu wie ein Quader od. dgl. aussieht, während aber dennoch in ihrem Inneren die Innenhöhlung nach wie vor die gewünschte Winkelform behält.

Eine solche Formgebung des Gehäuses verbessert nicht nur die Anordnung der Verbindungsstellen, sondern erhöht die Stabilität und vermindert die Empfindlichkeit beim Transport.

Besonders günstig ist dabei, wenn das Gehäuse des parallel oder schräg zu einer Gehäuseoberfläche verlaufenden Winkelschenkels in Richtung des in das Gehäuse führenden Winkelschenkels mit seinen Seitenwänden so weit verlängert ist, daß deren Ränder oder Randbereiche oder die darin einschnappenden oder damit verrastbaren Haltemittel des in das Gehäuse führenden Winkelschenkels in Gebrauchsstellung einen Anschlag gegenüber der Gehäuseoberfläche bilden. In Gebrauchsstellung stützt sich dann auch der etwa parallel zur Gehäuseoberfläche verlaufende Winkelschenkel an der Gehäuseoberseite ab, so daß in dieser Richtung wirkende Kräfte besser übertragen werden können. Darüber hinaus werden Zwischenräume zwischen diesem Winkelschenkel und der Gehäuseoberfläche vermieden. Somit wird die in diesem Bereich befindliche Verbindungsstelle durch die Auflage am Gehäuse zusätzlich gesichert oder kann so angeordnet werden, daß sie für Unbefugte sogar unzugänglich bleibt. Vor allem bei verrastbaren Verbindungsstellen kann es günstig sein, wenn durch das Einschrauben des senkrecht zur Gehäusewandung verlaufenden Winkelschenkels die Verbindungsstelle im Bereich des anderen Winkelschenkels etwas gegen die Gehäuseoberfläche angedrückt wird in dem Sinne, daß dadurch ein Zurückfedern der rastenden Teile gesperrt wird. Somit wird nicht nur der Abstand des noch parallel zur Gehäuseoberfläche laufenden Kabelbereiches gegenüber der Gehäuseoberfläche in günstiger und platzsparender Weise verringert, sondern gleichzeitig der Verschluß der Leitungseinführung in ihrer winkligen Gebrauchslage gesichert und verbessert.

Eine konstruktiv günstige Ausführungsform der Erfindung kann darin bestehen, daß im Bereich der etwa parallel zu ihrer Längsmittelebene verlaufenden Seitenwände der Winkelschenkel an dem einen Winkelschenkel Ausnehmungen und an dem damit verbindbaren zweiten Winkelschenkel Vorsprünge vorgesehen sind, die beim Verbinden der beiden Winkelschenkel, z.B. durch Zusammenschwenken um eine an ihrer Außenseite befindliche Achse quer zu dem Verlauf ihrer Innenhöhlung und/oder durch Zusammenstecken in einer einen Winkel bildenden Position, ineinanderpassen und gegeneinander festlegbar, vorzugsweise verrastbar oder einschnappbar sind.

Durch die erfindungsgemäße Anordnung der Verbindungsstellen außerhalb des Innenbereiches der Winkelschenkel ist es möglich, daß der Querschnitt der Innenhöhlung oder Bohrung des etwa parallel zur Gehäusewand verlaufenden Winkelschenkels, insbesondere eine mündungsseitige Erweiterung mit einem Innengewinde od.dgl. dieser Innenhöhlung, bis in den Bereich zwischen den beiden Verbindungsstellen und nahe an die Anschlagebene reicht, die in Gebrauchsstellung mit der Gehäuseoberfläche in Berührung ist. Somit kann also das in das Gehäuse einzuführende Kabel vor dem endgültigen Durchtritt durch die Gehäusewandung praktisch auf der Gehäusewandung verlaufen. Die Innenhöhlung kann aufgrund der gegenüber der Längsmittelebene weit nach aussen verlegten Verbindungsstellen der beiden Winkelschenkel in Gebrauchslage so knapp und tief über der Gehäuseoberfläche liegen, wie es aufgrund einer Mindestwandstärke in diesem Bereich gerade möglich ist. Dies kommt einer Montage unter beengten Platzverhältnissen entgegen.

Für die Handhabung der Leitungseinführung vor allem beim Einführen eines Kabels kann es vorteilhaft sein, wenn ein an der Außenseite des von den beiden Winkelschenkeln gebildeten Winkels liegendes Gelenk oder eine dort angeordnete zusätzliche Verbindungs- oder Kupplungsstelle für die beiden Winkelschenkel gegenüber der Ebene ihrer Trennstelle versetzt ist. Daraus kann resultieren, daß die beiden Winkelschenkel in Offenstellung für das Einführen des Kabels nicht um 180° aufgeklappt oder zueinander angeordnet sein müssen. Ferner kann dadurch die jeweilige Anordnung der Verbindungsstellen zum Fixieren der Winkellage der beiden Winkelschenkel und die zum Schließen dieser Verbindungsstellen eventuell erforderliche Schwenkrichtung oder Schieberichtung berücksichtigt werden.

Der eine Winkel kann als Verbindungsstelle eine randoffene Ausnehmung mit einer Hinterschneidung haben, in welche ein vorzugsweise bündig in diese Ausnehmung passender Vorsprung des anderen Winkelschenkels mit einer Rastnase oder Einschnappnase entsprechend der Hinterschneidung einschwenkbar oder einschiebbar ist. Dadurch können spezielle zusätzliche Verschlußteile vermieden werden. Ausgestaltungen der Anordnung der Verbindungstellen und Nasen sind Gegenstand der Ansprüche 11 bis 13, die unterschiedliche Anordnungen betreffen.

Eine weitere Möglichkeit, die Erfindung zweckmäßig zu realisieren, kann bei einer Leitungseinführung, bei welcher die beiden Winkelschenkel zunächst ohne gegenseitige Verbindung auf ein Kabel od.dgl. aufsteckbar und in Gebrauchsstellung des Kabels dann miteinander kuppelbar sind, darin bestehen, daß an den Außenwänden, insbesondere im Bereich der Trennstelle der Leitungseinführung, ggf. auch an der Außenseite der beiden winklig zueinander angeordneten Winkelschenkel quer zum Verlauf von deren Innenhöhlungen Verbindungsstellen, insbesondere Rastkupplungen vorgesehen sind und der in Gebrauchsstellung etwa paralle zur Gehäuseoberfläche verlaufende Winkelschenkel nach dem Befestigen des anderen Winkelschenkels an dem Gehäuse auf dem abgebogenen Kabel etwa parallel zur Gehäuseoberfläche gegen die Trennstelle des mit dem Gehäuse verbundenen Winkelschenkels verschiebbar und verrastbar ist. Dabei können insbesondere aufgrund dieser für die Fixierung der Winkelschenkel günstigen Schieberichtung zusätzlich zu den verrastbaren Verbindungsstellen in Richtung des parallel zur Gehäuseoberfläche verlaufenden Winkelschenkels Schiebeführungen an den beiden Winkelschenkeln vorgesehen sein, die die beiden Winkelschenkel bei ihrem Zusammenschieben und in Gebrauchsstellung führen und verbinden. Um dabei an diesen Schiebeführungen Kräfte aufnehmen zu können, beispielsweise Rückfederkräfte des durch die winklige Leitungseinführung gebogenen Kabels, können die Schiebeführungen zwischen den beiden in winkliger Position zueinander zusammenschiebbaren Winkelschenkeln durch in den Aussenwänden des verschiebbaren Winkelschenkels befindliche Nuten und darin eingreifende, voneinander wegweisende Vorsprünge oder Leisten des anderen Winkelschenkels - oder eine umgekehrte Anordnung von Nuten und Vorsprüngen - gebildet sein. Gleichzeitig ergibt sich dadurch auch im Bereich dieser Schiebeführung in Gebrauchsstellung eine gute gegenseitige Abdichtung.

Eine andere Möglichkeit, die beiden Winkelschenkel in Gebrauchslage zu fixieren, kann darin bestehen, daß die Verbindungsstelle eine quer zum Bohrungsverlauf liegende Raste an dem in Gebrauchstellung an der Gehäuseoberseite anliegenden Anschlagbereich der Leitungseinführung ist. Eine solche Verbindungsstelle verbindet dabei also dann praktisch die im Bereich der Außenwände der Leitungseinführung befindlichen Kupplungsstellen, indem sie von der einen zu der anderen Seite durchgehend verläuft. Weitere Möglichkeiten der Anordnung von Rastvorsprüngen sind Gegenstand der Ansprüche 18 bis 20.

Eine ganz besonders vorteilhafte und zweckmäßige Ausführungsform einer Leitungseinführung mit schwenkbar verbundenen oder verbindbaren Winkelschenkeln kann darin bestehen, daß zum Kuppeln der beiden Winkelschenkel im Bereich ihrer an der Außenseite des von ihnen gebildeten Winkels befindlichen Schwenkachse mit ihrer Lagerung die Schwenkachse in quer zur Lagerung offene Schlitze einschiebbar ist und die Schieberichtung vorzugsweise in Orientierungsrichtung des die Schwenkachse aufweisenden Winkelschenkels und quer zur Orientierungsrichtung des anderen Winkelschenkels verläuft. Somit können die beiden Winkelschenkel auch im Bereich ihrer Schwenkachse zunächst getrennt sein, zum Herstellen ihrer Schwenkverbindung aber ineinandergeschoben und miteinander verrastet werden, indem die Schwenkachse durch eine entsprechende Öffnung ihrer Lagerung eintrifft und dann in der Lagerung verdrehbar ist. Werden dabei die beiden Winkelschenkel in etwa winkliger Position zueinander ineinandergesteckt, ist die Schwenkverbindung vor allem in Offenstellung, in welcher ein Kabel zunächst eingeführt wird, gegen ungewolltes Öffnen gesichert. In Winkelposition hingegen können die beiden Winkelschenkel durch die anderen Verbindungsstellen genügend gesichert sein.

Darüber hinaus kann die Queröffnung der Lageraugen so eng sein, daß der Eintritt der Schwenkachse nur gegen einen Widerstand und der Austritt praktisch gar nicht möglich ist.

Ausgestaltungen der Verbindung der beiden Winkelschenkel in ihrer winkligen Gebrauchslage bei einer Ausführungsform, bei welcher die Schwenklagerung durch Zusammenstekken herstellbar ist, sind Gegenstand der Ansprüche 22 und 23. Insbesondere sind dabei Schiebebewegungen in der Orientierungsrichtung vorgesehen, in welcher das Zusammenstecken der Schwenklagerung erfolgen soll, so daß der Benutzer dieses Kuppeln der Schwenklagerung einfach durchführen kann. Gleichzeitig ergeben die nach dem Zusammenstecken der Lagerung verschließbaren Rast- oder Schnappverbindungen auch die gewünschten Verbindungen der beiden Schenkel in ihrer winkligen Gebrauchslage.

Eine auch für die Herstellung günstige, trotz der zusammensteckbaren Schwenklagerung nur insgesamt zwei Teile benötigende Ausführungsform einer winkelförmigen Leitungseinführung kann darin bestehen, daß der eine Winkelschenkel zwei miteinander fluchtende, aber beabstandete Lageraugen hat, die einseitig entgegen der Schieberichtung beim Zusammenfügen geschlitzt und etwas nachgiebig sind, und daß der zweite Winkelschenkel einen in seiner Breite gleich oder kleiner als der lichte Abstand der beiden Lageraugen bemessenen Vorsprung hat, von welchem zwei miteinander fluchtende und voneinander wegweisende Lagerzapfen vorzugsweise gleichen Querschnittes seitlich vorstehen, deren Querschnitt die Schlitze der Lageraugen insbesondere übertrifft, und daß die Lagerzapfen durch die Schlitze in die Lageraugen einsteckbar und damit verrastbar sind. Dabei können die Lageraugen innerhalb des Gehäuses des einen Winkelschenkes nach den in Verlängerung der Lagerzapfen befindlichen Außenseiten geschlossen angeordnet sein, so daß in Gebrauchsstellung die Schwenklagerung praktisch unsichtbar ist.

Die Einführschlitze für die Lagerzapfen in die Lageraugen können auf der der Innenhöhlung des die Lagerzapfen aufweisenden Winkelschenkels zugewandten Seite angeordnet sein. Die Lagerzapfen sind dabei zweckmäßigerweise einstückig mit dem Haltevorsprung des Winkelschenkels verbunden, so daß auch die Herstellung in einem Spritzvorgang erfolgen kann. Denkbar wären aber auch Lagerzapfen, die durch einen den Haltevorsprung durchsetzenden, beidseits vorstehenden Stift gebildet sind.

Auch die Lageraugen können dem sie aufweisenden Winkelschenkel einstückig angeformt sein, wobei zumindest dieser Winkelschenkel zweckmäßigerweise aus federnd elastischem Kunststoff besteht, damit die Lagerzapfen gut durch die Schlitze der Lageraugen quer zu deren Achsverlauf eingeschoben werden können, selbst wenn sie in ihrem Querschnitt die Schlitzstärke übertreffen.

Eine weitere zweckmäßige Ausführungsform der Erfindung kann darin bestehen, daß die Lagerzapfen und die Lageraugen in zusammengefügter Gebrauchsstellung unter Reibkraft und/oder überwindbarer Rastkraft aneinanderliegen und die Winkelschenkel in beliebigen Schwenkstellungen relativ zueinander durch Friktion und/oder lösbare Verrastungen feststellbar sind. Dies erlaubt vor allem bei der Montage unterschiedliche Schwenkstellungen der beiden Winkelschenkel zueinander, so daß ein eingeführtes Kabel zunächst nur teilweise abgebogen zu werden braucht, in einer solchen Teil-Biegeposition aber dennoch zumindest zeitweise gehalten werden kann.

Die Ausbildung der Lagerzapfen und Lageraugen entweder für einen Reibschluß oder auch eine gegenseitige Verrastung ist Gegenstand der Ansprüche 31 und 32.

Eine besonders vorteilhafte und zweckmäßige Ausgestaltung der Erfindung ist Gegenstand der Ansprüche 34 bis 36. In diesem Falle ist die Schnapp-oder Rastverbindung der beiden Winkelschenkel für die Fixierung ihrer winkligen Gebrauchslage unmittelbar in die Trennstelle selbst verlegt, so daß in vorteilhafter Weise spezielle besondere Rastverbindungen oder Verbindungsstellen in anderen Bereichen vermieden werden können. Insbesondere bei am gesamtem Umfang der Innenhöhlungen im Bereich der Trennstelle umlaufenden Hinterschneidungen, die miteinander verrastbar sind oder ineinander einschnappen können, kann dabei eine genügend große Kraft übertragen werden, um ein ungewolltes Lösen zu verhindern, zumal die Schnappverbindung auch so gestaltet sein kann, daß sie leicht einschnappt, aber nur schwer oder gar nicht ausrastbar ist.

Nachstehend ist die Erfindung mit ihren ihr als wesentlich zugehörenden Einzelheiten anhand der Zeichnung in mehreren Ausführungsbeispielen noch näher beschrieben. Es zeigt:

| | |
|---|---|
| Fig. 1 | eine winkelförmige Leitungseinführung mit Blick auf die Stirnseite des in Gebrauchsstellung etwa parallel zu einer Gehäuseoberfläche angeordneten Winkelschenkels, |
| Fig. 2 | eine Seitenansicht der in Fig.1 dargestellten Leitungseinführung und des von dem etwa senkrecht zu einer Gehäuseoberfläche stehenden Winkelschenkels mit einer von diesem ausgehenden Befestigungszunge, die den anderen Winkelschenkel und eine dort vorgesehene Befestigungsstelle rastend übergreift, |
| Fig. 3 | eine der Fig.1 entsprechende Ansicht, wobei die beiden Befestigungszungen durch eine parallel zur Oberfläche des Gehäuses verlaufende Wandung verbunden sind, |
| Fig. 4 | eine Seitenansicht und |
| Fig. 5 | eine Rückansicht der Ausführungsform nach Fig.3, |

| Fig. 6 | eine Seitensicht einer Ausführungsform nach Fig.1 und 2 in teilweise aufgeklappter Lage, |
| Fig. 7 | eine Seitenansicht einer abgewandelten Ausführungsform, bei welcher die von dem einen Winkelschenkel auf den anderen übergreifenden Befestigungszungen etwa von der Mitte der Trennebene ausgehen, |
| Fig. 8 | eine verkleinerte Darstellung gem. Fig.2 mit zwei Querschnittsdarstellungen gemäß der Schnittlinie A-B mit unterschiedlichen Ausgestaltungen der Berührstellen der beiden Winkelschenkel im Bereich ihrer Trennebene zur Aufnahme von seitlichen Schub-und/oder Stoßkräften, |
| Fig. 9 | eine Stirnansicht der Leitungseinführung gem.Fig.8 mit einem Querschnitt gem. der Linie C-D, wobei die Innenhöhlung des in Gebrauchsstellung etwa parallel zu einer Gehäuseoberfläche verlaufenden Winkelschenkels teilweise zischen den Rast- bzw. Verbindungsstellen angeordnet ist, |
| Fig.10 bis 12 | der Darstellung der Fig.3 entsprechende Ansichten von bzgl. der Ausführung der Verbindungsstellen abgewandelten Ausführungsformen, |
| Fig.13 bis 15 | Seitenansichten von Leitungseinführungen, bei denen die Rastvorsprünge und Rastausnehmungen der Verbindungsstellen senkrecht zu der von der Längsmitte der beiden Winkelschenkel aufgespannten Ebene angeordnet sind, |
| Fig.16 | eine Stirnansicht auf den in Gebrauchsstellung senkrecht zu einer Gehäuseoberfläche angeordneten Winkelschenkel der Ausführungsform nach Fig.15, |
| Fig.17 | einen Längsschnitt durch eine abgewandelte Ansführungsform, bei welcher die beiden Winkelschenkel in winkliger Position zueinander in ihre Gebrauchslage zusammenschiebbar und dadurch verbind- bzw. verrastbar sind, wobei das |
| | durch sie hindurchlaufende Kabel bereits abgebogen ist, |
| Fig.18 | einen Längsschnitt einer Leitungseinführung gem. Fig. 17 in Gebrauchsstellung ohne ein Kabel, |
| Fig.19 | eine Ansicht einer Leitungseinführung gem den Fig. 17 u. 18 auf die Stirnseite des in Gebrauchsstellung parallel zur Gehäuseoberseite verlaufenden Winkelschenkels und |
| Fig.20 | eine Seitenansicht der Leitungseinführung gem.den Figuren 17 bis 19 in montierter Position, |
| Fig.21 | einen Längsschnitt durch eine Ausführungsform gem. Fig.3 bis 5, |
| Fig.22 | einen Schnitt gem.der Linie A-B in Fig.21 durch das Schwenkgelenk der schwenkbar miteinander verbundenen Winkelschenkel, |
| Fig.23 | eine Seitenansicht des in Gebrauchsstellung senkrecht zur Gehäuseoberfläche angeordneten Winkelschenkels der Leitungseinführung gem.den Fig.3 bis 5 u.21 u.22 ohne den zweiten Winkelschenkel, |
| Fig.24 | eine teilweise im Schnitt gem.der Linie A-B in Fig.23 gehaltene Ansicht des Winkelschenkels mit der Ausbildung der Lageraugen und |
| Fig.25 | einen Längsschnitt durch den Winkelschenkel gem.den Fig.23 u.24, |
| Fig.26 | eine Seitenansicht des in Gebrauchsstellung parallel zu einer Gehäuseoberfläche verlaufenden Winkelschenkels der Ausführungsform gem.den Figuren 3 bis 5 u.21 u.22, |
| Fig.27 | einen Querschnitt des Winkelschenkels gem.der Linie A-B in Fig. 26 durch den Bereich der Lagerzapfen der Schwenkverbindung der beiden Winkelschenkel sowie |
| Fig.28 | ein Ausführungsbeispiel, bei welchem die beiden Winkelschenkel am Umfang der Innenhöhlungen ihrer Trennstelle mit Hinterschneidungen versehene, ineinander verrastbare Stufen für eine druckknopfarti- |

ge Verbindung haben,

Fig.29 bis 31　　Abwandlungen der Befestigung der Lagerzapfen der Schwenkverbindung.

Bei den nachfolgend beschriebenen verschiedenen Ausführungsbeispielen winkelförmiger Leitungseinführungen 1 erhalten übereinstimmende oder gleichwirkende Teile oder Bereiche jeweils übereinstimmende Bezugszeichen, selbst wenn sie sich in Aussehen und Form voneinander unterscheiden. Anhand einer Figur nicht mehr näher erläuterte derart gekennzeichnete Teile funktionieren dabei in gleicher Weise wie die übereinstimmenden Teile bei Ausführungsbeispielen, bei denen sie besonders erwähnt und beschrieben sind.

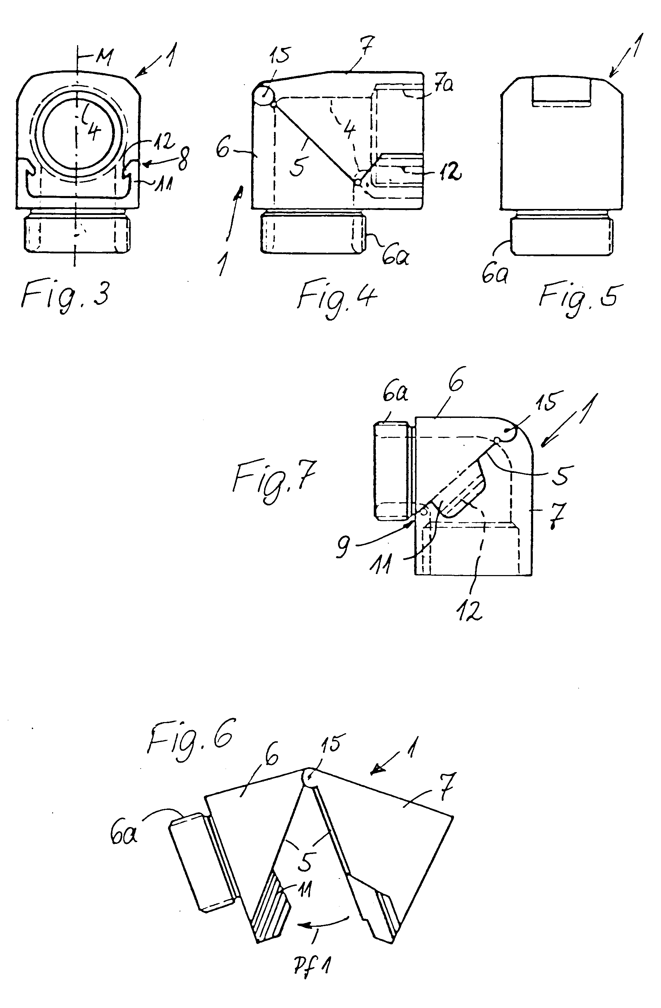

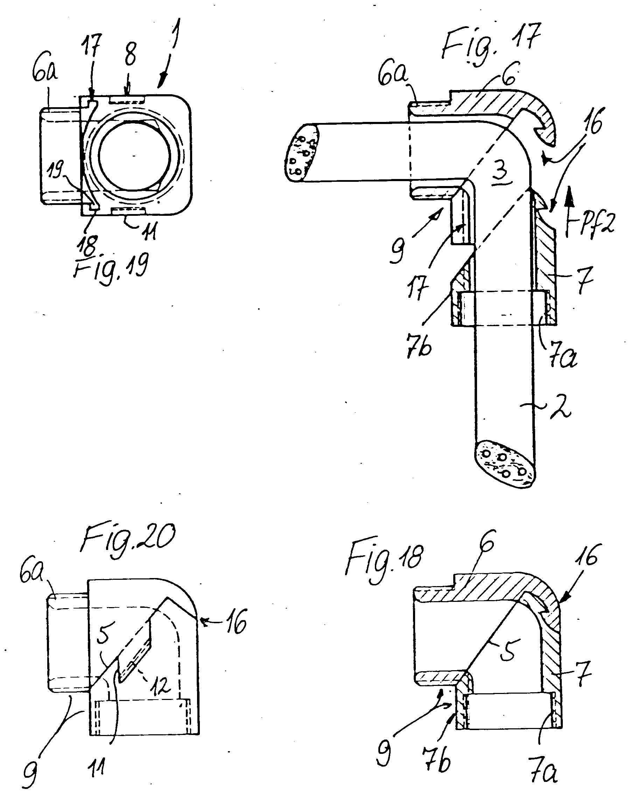

Die winkelförmige Leitungseinführung 1, die in ihrem Inneren wie ein Rohrkrümmer gestaltet ist, dient zum Einführen von elektrischen Leitungen, Schläuchen oder Kabeln 2 unter einem Winkel in ein nicht näher dargestelltes Gehäuse od.dgl., wobei das Kabel 2 oder eine sonstige Leitung schräg oder parallel zur Gehäuseoberfläche verläuft und etwa rechtwinklig oder schräg in dieses eintritt und wobei der Biegebereich 3 des Kabels 2 od.dgl. von einer Innenhöhlung 4 der Leitungseinführung 2 umschlossen ist, wie es in einem Vorstadium in Fig. 17 dargestellt ist. Dabei ist im Winkelbereich der Leitungseinführung 1 eine Trennstelle 5 zwischen den beiden Schenkeln 6 u.7 der Leitungseinführung 1 vorgesehen und die beiden Schenkel 6 u.7 sind in ihrer einen Winkel bildenden Gebrauchslage - wie sie beispielsweise in Fig.2,4,7,8 usw.dargestellt ist - zur Fixierung dieses Winkels an wenigstens einer noch zu erläuternden Verbindungsstelle in unterschiedlicher Weise verbindbar, vorzugsweise einschnapp- oder verrastbar, was nachfolgend bei der konkreten Schilderung der einzelnen Ausführungsbeispiel näher ausgeführt wird. Eine Zwischenstellung der Leitungseinführung vor der endgültigen Fixierung der Schenkel 6 u.7 in ihrer Gebrauchslage ist in Fig.6, 17 und 28 zu erkennen.

Dabei erkennt man bei allen Ausführungsbeispielen an dem in Gebrauchslage senkrecht zu einer Gehäuseoberfläche stehenden Winkelschenkel 6 einen vorstehenden Gewindestutzen 6a, mittels dessen Außengewinde die Leitungseinführung 1 an einem Innengewinde einer Gehäusebohrung verschraubbar ist. Hat der Gehäusedurchtritt jedoch einen stutzenförmigen Gewindeansatz, könnte auch der andere Schenkel 7 mit seinem Innengewinde 7a daran angreifen.

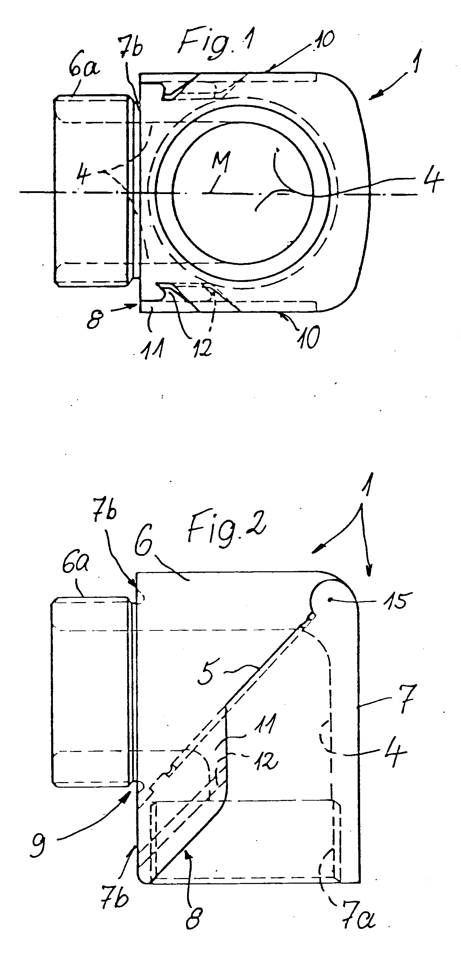

Allen Ausführungsbeispielen ist gemeinsam, daß die die Gebrauchslage der beiden Schenkel 6 u.7 in ihrer winkligen Position fixierenden Verbindungsstellen 8 seitlich von der zwischen beiden Winkelschenkeln 6 u.7 befindlichen Innenseite 9 des an der winkelförmigen Leitungseinführung 1 befindlichen Innenwinkels angeordnet sind, was man besonders gut beispielsweise in Fig.1,3,9,10 bis 12, 16 u.19 erkennt. Dabei sind diese in den verschiedenen Ausführungsbeispielen unterschiedlich geschalteten Verbindungsstellen 8 der beiden Winkelschenkel 6 u.7 in ihrer Gebrauchslage jeweils in einer Ebene angeordnet, die durch die am weitesten gegenüber der Längsmitte M der Leitungseinführung 1 außenliegende Begrenzung 10 der Winkelschenkel 6 u.7 aufgespannt ist, oder die etwa tangential zu den im Winkel stehenden Innenhöhlungen 4 der im Winkel angeordneten Schenkel 6 u.7 verläuft oder die sich zwischen diesen beiden Ebenen befindet. Vor allem diese letzte Alternative ist besonders günstig, weil dann die Verbindungsstellen 8 innerhalb der Wandstärke des gesamten Gehäuses der Leitungseinführung 1 untergebracht sein können, also weder nach außen noch nach innen vorstehen.

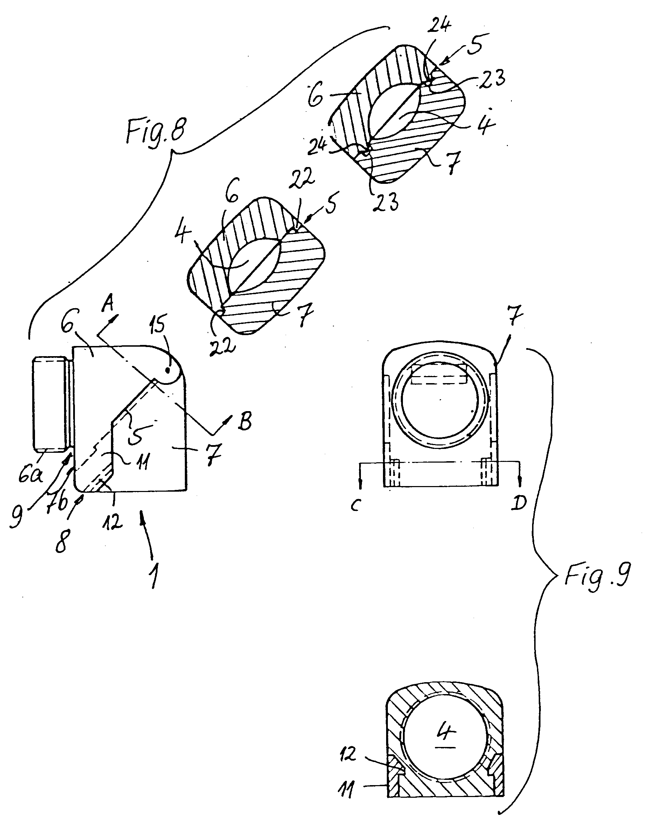

Diese Anordnungen haben den Vorteil, daß die Innenhöhlungen 4 mit ihrem Querschnitt zumindest teilweise zwischen diesen Verbindungsstellen 8 liegen können, wie man es gut beispielsweise in Fig.1 oder 9 erkennt, so daß also die in Gebrauchslage etwa parallel zu einer Gehäuseoberfläche verlaufende Innenhöhlung 4 des Schenkels 7 sehr nah an einer solchen Gehäuseoberfläche angeordnet sein kann, also wesentlich weniger übersteht, als wenn die Verbindungsstellen 8 an der Innenseite 9 in dem Winkelraum zwischen den beiden Winkelschenkeln 6 u.7 angeordnet wären und dort einen entsprechenden Platzbedarf hätten. Unter einer Anordnung seitlich von dieser Innenseite ist dabei auch eine solche Anordnung zu verstehen, bei der die Verbindungsstelle in Richtung des parallel zu einer Gehäuseoberfläche verlaufenden Winkelschenkels 7 von dieser Innenseite 9 und dem Winkelraum weg verschoben angeordnet ist, wie es beispielsweise in den Figuren 13 bis 16 angedeutet ist.

In der Mehrzahl der Fälle ist beidseits der Längsmittelebene M der in Gebrauchslage befindlichen Winkelschenkel 6 u.7 jeweils eine außenliegende Verbindungsstelle 8 zum Festlegen der Winkelposition vorgesehen, wobei die beiden Verbindungsstellen 8 symmetrisch zu der Längsmittelebene M angeordnet sind. Dies ergibt eine gleichmäßige Kraftverteilung und erleichtert die Herstellung und Bedienung.

Bei allen Ausführungsbeispielen nach Fig.1 bis 27, bei welchen im Querschnitt etwa kreisförmige Innenhöhlungen 4 vorgesehen sind, ist das diese Innenhöhlungen 4 eines Winkelschenkels 6 oder 7 umschließende Gehäuse an seiner etwa tangential zu der Innenhöhlung 4 und parallel zur Längsmitte M verlaufenden Wandung in den Bereich der Innenseite des Winkels bzw. gegen eine Gehäuseoberfläche hin verlängert und mit Verbindungsmitteln zum Verrasten und/oder Verriegeln der beiden Winkelschenkel versehen, so daß in Gebrauchslage praktisch kein Zwischenraum zwischen dem etwa parallel zur Gehäuseoberfläche verlaufenden Schenkel 7 und der Gehäuseoberfläche selbst verbleibt. Es ergibt sich vielmehr ein kompaktes, weitgehend quaderförmiges, allenfalls an den Außenseiten gerundetes Gehäuse hoher Stabilität, dessen Winkelcharakter zumindest in Gebrauchsstellung von außen gar nicht mehr erkennbar ist. Dies gilt vor allem dann, wenn das Gehäuse des parallel oder schräg zu einer Gehäuseoberfläche verlaufenden Winkelschenkels 7 in Richtung des in das Gehäuse führenden Winkelschenkels 6 mit seinen Seitenwänden so weit verlängert ist, daß deren Ränder oder Randbereiche 7b oder die damit verrastbaren, noch näher zu beschreibenden Haltemittel des in das Gehäuse führenden Winkelschenkels 6 in Gebrauchsstellung einen Anschlag gegenüber der Gehäuseoberfläche bilden können, wie dies beim Ausführungsbeispiel nach Fig.1 u.2 oder auch den Ausführungsformen gemäß den Figuren 3 bis 15 der Fall ist.

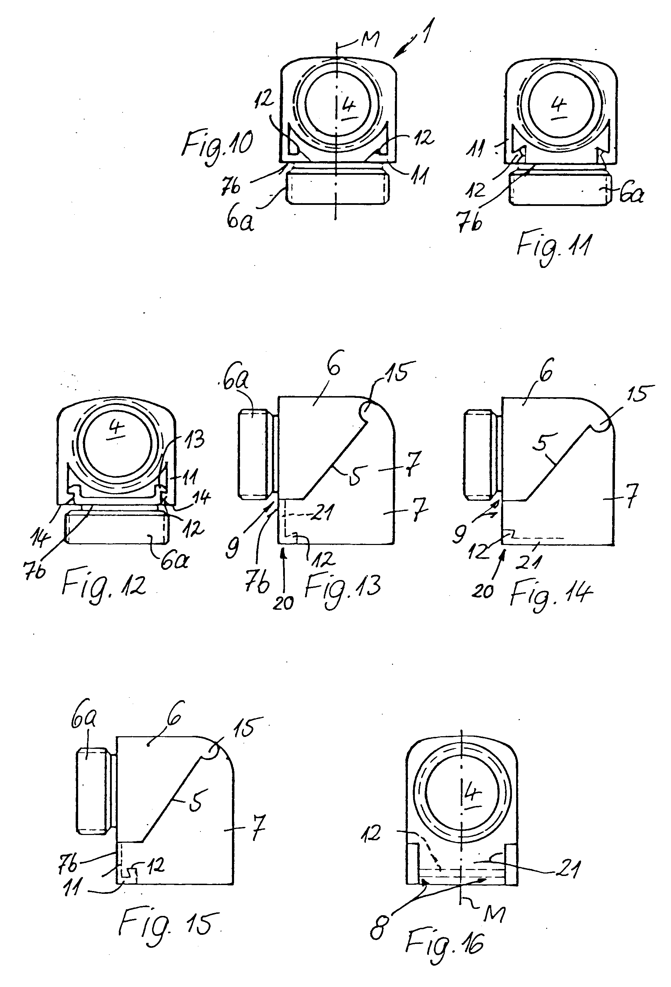

Dabei kann sogar die Rastverbindung 8 durch den Anschlag am Gehäuse in ihrer Verschlußlage gesichert sein, wie dies bei den Figuren 10 u.11 sofort deutlich wird. Wenn nach dem Verrasten der beiden Schenkel 6 u.7 in ihrer Gebrauchslage die Leitungseinführungen 1 gemäß diesen Figuren mit ihren Gewindestutzen 6a in ein Gehäuse so tief wie möglich eingeschraubt sind, können die Rastzungen 11 dieser Ausführungsformen nicht mehr bewegt und also auch nicht mehr geöffnet werden. Dies rührt daher, daß die eigentlichen Rastvorsprünge 12 an diesen Rastzungen 11 in dieser Gebrauchslage von einer Gehäuseoberfläche weg nach oben stehen und in entsprechende Ausnehmungen eingreifen. Es sei erwähnt, daß statt Rastverbindungen jeweils auch nicht oder kaum wieder lösbare Schnappverbindungen vorgesehen sein können.

Im Gegensatz dazu bleiben die an den seitlichen Außenflächen befindlichen Rastzungen 11 mit ihren Rastvorsprüngen 12 bei den Ausführungsbeispielen gemäß Fig.1 bis 3 von der Seite der zugänglich und könnten auch in Montageposition geöffnet werden. Ebenso könnte ein nachträgliches Öffnen in Gebrauchsstellung bei der Lösung nach Fig.12 erfolgen, wo ebenfalls an den seitlichen Wänden von oben her gegen eine Gehäuseoberfläche verlaufende Rastzungen 11 mit ihren Vorsprüngen 12 Gegenvorsprünge 13 untergreifen. Allerdings würden dabei die Stirnseiten 14 dieser Rastzungen 11 in Anschlag mit der Gehäuseoberfläche treten, so daß ein nachträgliches Öffnen - in erwünschter Weise - ohne Lockerung der Schraubverbindung schwierig wäre.

Je nachdem, ob also die Verrastung der beiden Winkelschenkel 6 u.7 miteinander in Gebrauchslage gesichert sein soll oder nicht, kann die eine oder andere Ausführungsform gewählt werden.

Um Spreizkräften an der schrägen Trennebene oder Trennstelle 5 zwischen den beiden Winkelschenkeln 6 u.7 bestmöglich aufnehmen zu können, ist in den Ausführungsbeispielen gemäß Fig.1,2,6,7,8 u.20 vorgesehen, daß die Rastvorsprünge 12 und die dazugehörigen Rastausnehmungen sich jeweils etwa parallel zur Trennebene 5 der beiden Schenkel 6 u.7 erstrecken. Dazu sind wie auch bei anderen Ausführungsbeispielen im Bereich der etwa parallel zu ihrer Längsmittelebene M verlaufenden Seitenwände der Winkelschenkel 6 u.7 an dem einen Winkelschenkel, bevorzugt dem Winkelschenkel 7, Ausnehmungen und an dem damit verbindbaren zweiten Winkelschenkel 6 die Rastvorsprünge 12 vorgesehen, die beim Verbinden der beiden Winkelschenkel z.B. durch Zusammenschwenken gemäß dem Pfeil Pf 1 in Fig.6 um eine an ihrer Außenseite befindliche Schwenkachse 15 quer zu dem Verlauf ihrer Innenhöhlung 4 oder durch Zusammenstecken gemäß Fig.17 in einer einen Winkel bildenden Position ineinanderpassen und gegeneinander festlegbar, in diesen Fällen verrastbar sind.

Durch Fig.2 und beispielsweise Fig.9, aber auch Fig. 18 sowie weitere Seitenansichten wird verdeutlicht, was bereits erwähnt wurde, daß nämlich der Querschnitt der Innenhöhlung 4 oder Bohrung des etwa parallel zu einer Gehäusewand verlaufenden Winkelschenkels 7 und dabei vor allem eine mündungsseitige Erweiterung mit einem Innengewinde 7a bis in den Bereich zwischen den beiden Verbindungsstellen 8 und nahe an die Anschlagebene reicht, die in Gebrauchsstellung mit der Gehäuseoberfläche in Berührung ist. Somit kann hier beispielsweise eine Kabelverschraubung zur Fixierung des Kabels 2 befestigt werden.

Als Verbindungsstelle 8 ist, wie ebenfalls bereits erwähnt, an einem Winkelschenkel jeweils eine randoffene Ausnehmung mit einer Hinterschneidung vorgesehen, in welche ein jeweils bündig passender Vorsprung in Form einer Zunge oder Lasche 11 des anderen Winkelschenkels mit einer Rastnase 12 entsprechend der Hinterschneidung einschwenkbar oder einschiebbar ist. Zur Erleichterung zunächst des Aufbiegens und dann des Einschnappens der Rastnasen haben dabei die Rastvorsprünge 12 in an sich bekannter Weise außenseitige Abschrägungen. In der Mehrzahl der Fälle hat dabei der Winkelschenkel 7, dessen Innenhöhlung 4 in Gebrauchslage etwa parallel zu einer Gehäuseoberfläche verläuft und dessen Seitenwände bis nahe an die Oberfläche oder gar bis in Anschlagverbindung mit dieser Oberfläche verlängert sind, die nach außen offene, Hinterschneidungen bildende Ausnehmung, während der andere Winkelschenkel 6 die dazu passenden Rastnasen 12 hat. Dies erleichtert das "Zuklappen" des "freien" Schenkels 7,wenn der andere Schenkel 6 bereits mittels seines Stutzens und Gewindes 6a an dem Gehäuse befestigt ist. Beim Verrasten ergibt sich dabei eine feste und belastbare Verbindung durch die schon erwähnte Anordnung, bei welcher die Ausnehmungen an der Verbindungsstelle 8 schräg und bevorzugt parallel zur Trennstelle 5 der beiden Winkelschenkel 6 u.7 verläuft und der die Rastnasen 12 jeweils aufweisende Schenkel den mit der Ausnehmung versehenen Bereich der Seitenwand beispielsweise zumindest mit der die Rastvorsprünge 12 aufweisenden Zunge 11 außen übergreift. Diese Anordnung ist beispielsweise in den Ausführungsbeispielen gem. den Figuren 1 u.2,6 u.7 oder auch 20 erfüllt.

Bei den schon angesprochenen Ausführungsbeispielen gemäß den Figuren 10,11 u. 12 ist vorgesehen, daß die Verlängerung der Außenwand des etwa parallel zur Oberseite eines Gehäuses verlaufenden Winkelschenkels 7 nach innen gerichtete Rastnasen 12 hat, daß die verlängerten Außenwände den Kupplungsbereich 8 des quer zur Gehäuseoberfläche in diese führenden Winkelschenkels 6 übergreift und die Rastnase 12 in an diesem letztgenannten Winkelschenkel 6 befindliche, Hinterschneidungen aufweisende Ausnehmungen passen. Beim Vergleich von Fig.12 u.Fig. 1 wird diese praktisch gegensinnige Anordnung besonders deutlich.

Die Figuren 17 bis 20 zeigen eine Leitungseinführung 1, bei welcher die beiden Winkelschenkel 6 u.7 ohne gegenseitige Verbindung auf das Kabel 2 aufsteckbar und in Gebrauchsstellung des Kabels 2 dann miteinander kuppelbar sind. Fig. 17 verdeutlicht dabei den Zustand während der Montage noch vor dem Erreichen der endgültigen Gebrauchslage, die in Fig.18 dann erreicht ist, wobei in Fig.18 aber der besseren Deutlichkeit wegen das Kabel 2 nicht gezeichnet ist.

Im Ausführungsbeispiel nach den Figuren 17 bis 20 ist vorgesehen, daß an den Außenwänden im Bereich der Trennstelle 5 wiederum Verbindungsstellen 8, insbesondere Rastkupplungen mit einer Rastzunge 11 und Rastvorsprüngen 12 vorgesehen sind und daß der in Gebrauchsstellung parallel zu einer Gehäuseoberfläche verlaufende Winkelschenkel 7 nach dem Befestigen des anderen Winkelschenkels 6 an dem Gehäuse auf dem abgebogenen Kabel 2 etwa parallel zur Gehäuseoberfläche in Richtung des Pfeiles Pf 2 in Fig.17 gegen die Trennstelle 5 des mit dem Gehäse verbundenen Winkelschenkels 6 verschiebbar und verrastbar ist. Neben den Rastzungen 11 mit Rastvorsprüngen 12 ist dabei auch an der Außenseite des Winkels eine Rastkupplung 16 erkennbar.

Zusätzlich zu den verrastbaren Verbindungsstellen 8 und 16 sind ferner in Richtung des parallel zur Gehäuseoberfläche verlaufenden Winkelschenkels 7 Schiebeführungen 17 an den beiden Winkelschenkeln 6 u.7 in einem zu ihrer Trennstelle 5 hinführenden Bereich vorgesehen, die die beiden Winkelschenkel bei ihrem Zusammenschieben und in Gebrauchsstellung führen und verbinden. Diese Führungen bilden im Querschnitt gemäß Fig.19 eine Nut- und Federverbindung, können also Kräfte besonders gut aufnehmen, die die beiden Winkelschenkel im Bereich ihrer Trennstelle 5 aufspreizen möchten. Ein ganz wichtiger Vorteil dieser Schiebeführung besteht jedoch darin, daß die Montage vereinfacht ist,weil die Schiebeführungen dafür sorgen, daß die beiden Winkelschenkel durch eine einfache Schiebebewegung mit Sicherheit in ihre Kupplungs- und Verbindungsposition gelangen. Vor allem Fig.19 verdeutlicht, daß die Schiebeführungen 17 zwischen den beiden zusammenschiebbaren Winkelschenkeln 6 u.7 durch in den Außenwänden des verschiebbaren Winkelschenkels 7 befindliche Nuten 18 und darin eingreifende, voneinander wegweisende Vorsprünge 19 oder Leisten des anderen Winkelschenkels 6 gebildet sind.

Bzgl. der Verbindungsstelle 8 abgewandelte Ausführungsbeispiele zeigen die Figuren 13 bis 16. In diesem Falle ist die Verbindungsstelle 8 eine quer zum Bohrungsverlauf liegende Raste 20 an dem in Gebrauchsstellung an der Gehäuseoberseite anliegenden Anschlagbereich der Leitungseinführung 1. Dabei ist vorgesehen, daß ein mit einem Rastvorsprung 12 versehener Schenkel 21 vom dem quer zum Gehäuse verlaufenden, an diesem befestigbaren Winkelschenkel 6 ausgehend etwa parallel zur Gehäuseoberfläche in Richtung des zweiten Winkelschenkels 7 ragt, der vzw. schwenkbar mit dem ersten Winkelschenkel 6 verbunden ist und eine zu dem Rastvorsprung 12 passende Ausnehmung hat. Lediglich bei Fig. 14 verläuft der Schenkel 21 mit dem Rastvorsprung 12 etwa senkrecht zu der späteren Gehäuseoberfläche.

Auch bei diesen Ausführungsbeispielen gemäß Fig.13 u.15 ergibt sich durch die Anlage an der Gehäuseoberfläche gleichzeitig eine Sicherung der Rastverbindung, weil die Schenkel 21 in Gebrauchsstellung auf der Gehäuseoberfläche aufliegen und somit nicht mehr zum Ausrasten ausgeschwenkt werden können. Auch bei diesen Ausführungsbeispielen ist jedoch ähnlich wie bei den zuvor beschriebenen eine beim Verrasten etwas nachgiebige, den Rastvorsprung 12 aufweisende Zunge 21 vorgesehen, die somit den Schenkeln oder Zungen 11 entspricht und beim Einschwenken in die Gebrauchslage mit einer Rastausnehmung des anderen Winkelschenkels in Wirkverbindung tritt.

Auch bei diesen Lösungen gem. Fig.13 bis 16 liegen die Verbindungsstellen 8 seitlich der Längsmitte M, wenngleich sie durch diese Mitte hindurch miteinander verbunden sein können.

Abgesehen vom Ausführungsbeispiel gem. den Figuren 17 bis 20, bei welchem an der Außenseite des von den beiden Winkelschenkeln 6 u.7 gebildeten Winkels eine Kupplungsstelle 16 für die beiden Winkelschenkel vorgesehen ist, die gegenüber der Trennebene 5 versetzt ist, ist bei den anderen Ausführungsbeispielen an dieser Stelle ein Gelenk mit der Achse 15 vorgesehen, die dabei ebenfalls gem. Fig.2 oder 13 u. 14 gegenüber dieser Trennebene 5 versetzt sein kann. Dabei zeigt der direkte Vergleich der Figuren 13 u. 14, daß diese Gelenkachse 15 nach der einen oder anderen Seite der Trennebene 5 hin versetzt sein kann. Fig.7 ist demegegenüber ein Beispiel, bei welchem die Schwenkachse 15 des Gelenkes in der Trennebene angeordnet ist.

Einer der beiden durch die Schwenkverbindung 15 an der Außenseite verbundenen Winkelschenkel hat in der Mehrzahl am der Schwenkverbindung entgegengesetzten Ende der Trennstelle 5 gegenüber der Trennstelle vorstehende Lappen 11 oder 21 mit Rastvorsprüngen 12, während der andere Winkelschenkel entsprechende Einsenkungen mit Rastausnehmungen aufweist, so daß in Schließstellung die beiden Winkelschenkel durch diese Rastverbindungen und die Schwenkverbindung gemeinsam zusammegehalten werden.

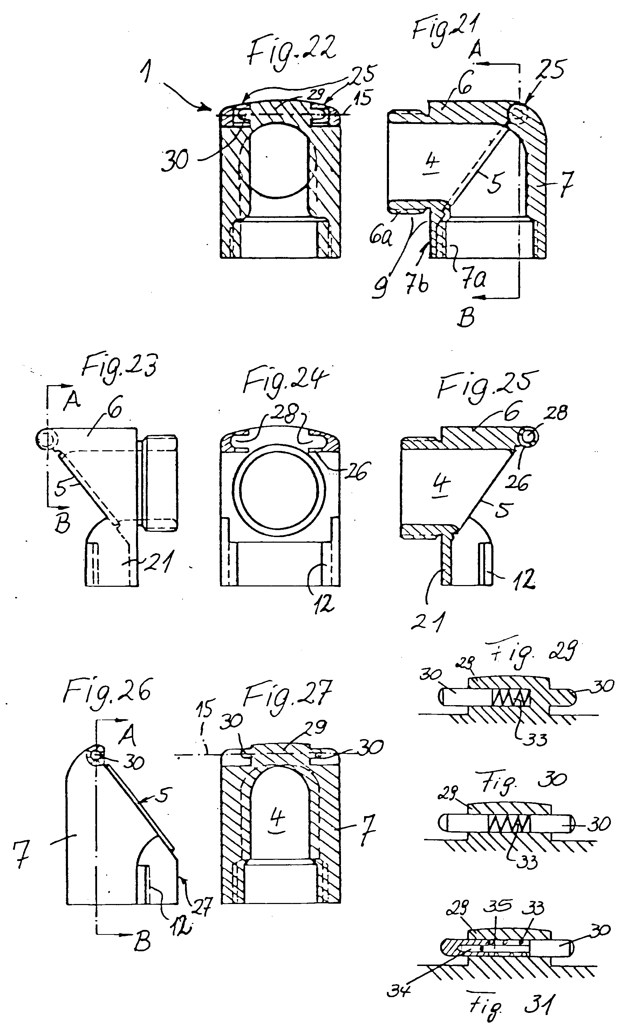

Um dabei auch quer zur Trennstelle 5 auftretende Kräfte gut aufnehmen zu können, ist gem. Fig.8 vorgesehen, daß die Berührflächen der beiden Schenkel 6 u.7 formschlüssig ineinanderpassende Stufen 22 haben oder als Nut- und Federverbindung mit einer Nut 23 und einem federartigen Vorsprung 24 ausgebildet sind. Eine besonders zweckmäßige Ausgestaltung der Erfindung ist in den Figuren 22 bis 27 dargestellt und betrifft die Möglichkeit, an der Außenseite des Winkels zwar eine Schwenkverbindung mit Hilfe einer Schwenkachse 15 herzustellen, diese aber dennoch im Sinne der Rastkupplung 16 der Fig.17 betätigen zu können. Zum Zusammenhalten der beiden Winkelschenkel 6 u.7 in ihrer Gebrauchslage sind wiederum Zungen 21 mit Rast- oder Schnappvorsprüngen 12 vorgesehen, damit bei Verwendung der eigentlichen Schwenkverbindung ein Schließen möglich ist.

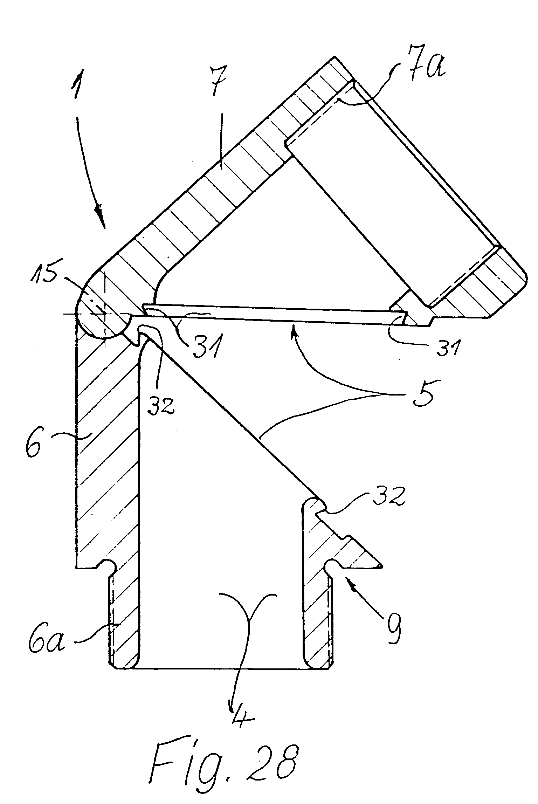

Aus diesem Grunde ist bei der Leitungseinführung 1 mit schwenkbar verbundenen oder verbindbaren Winkelschenkeln 6 u.7 gem. den Figuren 22 bis 27 vorgesehen, daß zum Kuppen der beiden Winkelschenkel 6 u.7 im Bereich ihrer an der Außenseite des von ihnen gebildeten Winkels befindlichen Schwenkachse 15 mit ihrer Lagerung 25 die Schwenkachse 15 in quer zur Lagerung 25 offene Schlitze 26 einschiebbar ist und die Schieberichtung in Orientierungsrichtung des die Schwenkachse 15 aufweisenden Winkelschenkels und quer zur Orientierungsrichtung des anderen Winkelschenkels verläuft, indem auf offene Schlitzt 26 an der entsprechenden Seite der Lagerung 25 angeordnet ist. Die montierte Anordnung der beiden Winkelschenkel geht dabei aus den Fig. 21 u.22 hervor, während die Ausbildung des senkrecht zu einer Gehäuseoberfläche stehenden und an dieser anschraubbaren Winkelschenkels 6 in den Fig.23 bis 25 und die des anderen Winkelschenkels 7 in den Fig. 26 u.27 dargestellt ist.

Dabei erkennt man auch, daß in dieser dargestellten Ausführungsform zur Verbindung der beiden Winkelschenkel 6 u.7 in ihrer winkligen Gebrauchslage eine in Richtung der Schiebebewegung beim Kuppeln der Schwenkachse 15 mit der Lagerung 25 verlaufende Rastzunge 12, die an dem Vorsprung 21 des Schenkels 6 angeordnet ist.

Dabei ist dieser Vorsprung 21 an dem Winkelschenkel 6 etwa rechtwinklig zum Verlauf von dessen Innenhöhlung 4 angeordnet, der quer zur Gehäuseoberfläche an dieser befestigbar ist und in Gebrauchsstellung einen an dem anderen Winkelschenkel 7 befindlichen Ausschnitt 27 in Gebrauchsstellung abschließt.

Fig. 24 verdeutlicht, daß der eine Winkelschenkel 6 als Lagerung 25 zwei miteinander fluchtende, aber beabstandete Lageraugen 28 hat, die zum Zusammenfügen einseitig geschlitzt und etwas nachgiebig sind, und daß der zweite Winkelschenkel 7 einen in seiner Breite gleich oder kleiner als der lichte Abstand der beiden Lageraugen 28 bemessenen Vorsprung 29 hat, von welchem zwei miteinander fluchtende Lagerzapfen 30 gleichen Querschnittes seitlich vorstehen, deren Querschnitt dabei die Breite der Schlitze 26 der Lageraugen 28 übertrifft, und daß die Lagerzapfen 30 durch die Schlitze 26 in die Lageraugen 28 einsteckbar und damit verrastbar sind. Danach ist dann auch in diesem Bereich eine Rastkupplung oder Schwenkverbindung hergestellt.

In vorteilhafter Weise sind dabei die Lageraugen 28 innerhalb des Gehäuses des einen Winkelschenkels 6 gem.Fig. 24 nach den in Verlängerung der Lagerzapfen 30 befindlichen Außenseiten geschlossen. Somit ist in Gebrauchsstellung die Schwenklagerung geschützt und verdeckt.

Die Einführschlitze 26 für die Lagerzapfen 30 in die Lageraugen 28 sind auf der der Innenhöhlung 4 des die Lagerzapfen 28 aufweisenden Winkelschenkels 7 zugewandten Seite angeordnet. Dabei sind die Lagerzapfen 30 im Ausführungsbeispiel einstückig mit dem Haltevorsprung 29 des Winkelschenkels 7 verbunden. Denkbar wäre hier jedoch auch ein diesen Vorsprung durchsetzender separater Stift. Die einstückige Ausbildung beschleunigt jedoch die Herstellung.

Obwohl auch eine umgekehrte Anordnung möglich wäre, ist im Ausführungsbeispiel vorgesehen, daß der an der Gehäuseoberfläche anbringbare Winkelschenkel 6 die Lageraugen 28 und der andere Winkelschenkel 7 die Lagerzapfen 30 aufweist. Auch die Lageraugen 28 können ihrem Winkelschenkel 6 einstückig angeformt sein und dabei besteht dann zweckmäßigerweise zumindest dieser Winkelschenkel 6 aus federnd elastischem Kunststoff, damit die Lageraugen 28 im Bereich des Schlitzes 26 für den Durchtritt der Zapfen 30 genügend nachgiebig sind.

Vor allem für eine Lösung, bei welcher die beiden im Bereich der Schwenklagerung kuppelbaren Winkelschenkel schwenkbar und in Winkellage verrastbar sind, ist es vorteilhaft, wenn die Lagerzapfen 30 und die Lageraugen 28 in zusammengefügter Kupplungsstellung unter Reibkraft und/oder überwindbarer Rastkraft ineinandergreifen bzw. aneinanderliegen und die Winkelschenkel 6 u.7 in beliebiger Schwenkstellung relativ zueinander durch Friktion und/oder lösbare Verrastungen feststellbar sind. Es können dann beim Einführen von Kabeln und beim Fixieren Zwischenpositionen für eine gewisse Zeit eingehalten bleiben, was vor allem unter beengten Montageverhältnissen vorteilhaft sein kann.

Beispielsweise könnte der Querschnitt der Lagerzapfen 30 den Innenquerschnitt der etwas nachgiebigen Lageraugen so übertreffen, daß die Verschwenkung der beiden Winkelschenkel nur unter Reibung im Lager durchführbar ist.

Zusätzlich oder stattdessen können die Lagerzapfen 30 und/oder der Bereich des die Lagerzapfen 30 aufweisende Vorsprung, von welchem die Lagerzapfen 30 ausgehen, eine Zahnung und das Lagerauge 28 oder seine innere Stirnseite eine Gegenzahnung haben, wobei die Zahnungen in Gebrauchsstellung in lösbare Rastverbindung zueinander treten. Es entsteht dann beim Verschwenken eine Ratschenwirkung, die ein schrittweises Wählen unterschiedlicher Winkellagen ermöglicht.

Fig. 28 zeigt - noch in Offenstellung - eine besonders zweckmäßige und vorteilhafte Ausführungsform der erfindungsgemäßen Leitungseinführung 1, wobei nämlich am Außenrand der an der Trennstelle 5 in Gebrauchsstellung ineinander übergehenden Innenhöhlungen 4 der beiden Winkelschenkel 6,7 an der Trennstelle 5 selbst eine Einschnapp- oder Rastverbindung vorgesehen ist. In diesem Ausführungsbeispiel sind die Schnapp- oder Rastmittel dieser Verbindung am Umfang der Innenhöhlungen 4 der Winkelschenkel 6 u.7 umlaufend angeordnet, könnten aber bei abgewandelter Ausführung auch mit Abstand am Umfang verteilt sein. Die ermöglicht beim Schließen der jetzt geöffnet dargestellten Leitungseinführung 1 einfach ein druckknopfartiges Verbinden der beiden Winkelschenkel 6 u.7, wobei in vorteilhafter Weise die an den Berührflächen der Winkelschenkel 6 u.7 vorgesehenen Stufen 22 derart hinterschnitten sind, daß sie ineinander verrastbar oder ineinander einschnappbar sind. Eine analoge Ausgestaltung wäre auch bei der Nut-und Federverbindung gem. Fig.8 möglich.

Diese Ausführungsform gem. Fig. 28 hat den Vorteil, daß die im Bereich der Trennstelle 5 vorgesehenen Formgebungen zur Aufnahme seitlicher Kräfte, insbesondere Schubkräfte, dazu ausgenutzt werden kann, auch gleich die Verbindungsstelle zu schaffen und ein druckknopfartiges Schließen der beiden Winkelschenkel zu ermöglichen.

In Fig. 28 erkennt man deutlich, daß die Hinterschneidung 31 an dem Winkelschenkel 7 am Rand von dessen Innenhöhlung 4 bei der Trennstelle 5 vorgesehen ist, während an der damit in Berührung und Rast- oder Schnappverbindung tretenden Stelle des Winkelschenkels 6 ein umlaufender Vorsprung oder Wulst 32 vorgesehen ist, der sich so erweitert, daß er beim Schließen der Trennstelle 5 in die Hinterschneidung 31 rastend oder schnappend paßt. Da die Hinterschneidung 31 und der Wulst 32 umlaufend sind, kann an dieser Stelle gleichzeitig auch eine Dichtwirkung erzielt werden, insbesondere, wenn diese Leitungseinführung 1 aus etwas elastischem Kunststoff besteht.

In den Figuren 29 bis 31 sind Abwandlungen bzw. Ausgestaltungen der Leitungseinführung gem. den Fig. 22 bis 27 und dabei insbesondere bzgl. der Lagerzapfen 30 dargestellt. In diesen drei Ausführungsbeispielen ist vorgesehen, daß zumindest einer der Lagerzapfen 30 in axialer Richtung gegen eine Rückstellkraft zumindest teilweise in den ihn aufweisenden Vorsprung 29 des Winkelschenkels 7 zum Vorbeiführen des Lagerauges 28 beim Herstellen der Schwenkverbindung der beiden Winkelschenkel 6,7 miteinander verschiebbar ist.

Bei Fig. 29 ist dabei der eine Lagerzapfen 30 wiederum einstückig mit dem Vorsprung 29 verbunden, der andere Lagerzapfen 30 aber axial in den Vorsprung 29 verschiebbar.

Bei der Lösung nach Fig. 30 sind beide Lagerzapfen 30 in axialer Richtung gegen eine Rückstellkraft aufeinander zu und in das Innere des Vorsprunges 29 verschiebbar. Allerdings ist dabei der Verschiebeweg aufgrund der erforderlichen Länge der Lagerzapfen 30 und der Breite des Vorsprunges 29 beschränkt, so daß die Eingrifftiefe der Lagerzapfen 30 in ihre in Fig.30 dargestellten Gebrauchsstellung unter Umständen etwas knapp ist.

Deshalb ist in Fig.31 eine Lösung gezeigt, bei welcher die beiden voneinander wegweisenden, koaxial angeordneten Lagerzapfen 30 bereichsweise an den einander zugewandten Stirnseiten teleskopartig ineinandergreifen, indem der eine Lagerzapfen eine zentrale Lochung 34 und der andere Lagerzapfen einen in diese Lochung 34 passenden stiftartigen Vorsprung 25 hat. Auf diese Weise können die beiden Lagerzapfen 30 gegen die Rückstellkraft auch ineinader und in den Vorsprung 29 verschoben werden und haben jeweils längere Abstützbereiche zur Aufnahme von von den Lageraugen 28 ausgehenden Kräften.

Zur Erzeugung der Rückstellkraft ist in den drei Lösungen gem. den Fig. 29 bis 31 jeweils eine Druckfeder 33 im Verschiebeweg des Lagerzapfens 30 im Inneren des Vorsprunges 29 vorgesehen.

Durch diese Abwandlung bei den Lagerzapfen 30 kann auf die Einführschlitze 26 in den Lageraugen 28 verzichtet und somit die Stabilität der Lageraugen 28 erhöht werden. Bei der Montage brauchen die Lagerzapfen 30 nur gegen ihre Rückstellkraft in den Vorsprung 29 verschoben zu werden, um nach dem Vorbeiführen der Lageraugen 28 wieder losgelassen zu werden, wodurch sie dann in die Lageraugen 28 axial eintreten.

## Patentansprüche

1. Winkelförmige Leitungseinführung (1), insbesondere Rohrkrümmer, zum Einführen von elektrischen Leitungen, Schläuchen oder Kabeln (2) unter einem Winkel in ein Gehäuse od.dgl., wobei das Kabel (2) od.dgl. schräg oder parallel zur Gehäuseoberfläche verläuft und etwa rechtwinklig oder schräg in dieses entritt und wobei der Biegebereich (3) des Kabels (2) od.dgl. von einer Innenhöhlung (4) der Leitungseinführung (1) umschlossen ist, im Winkelbereich der Leitungseinführung (1) eine Trennstelle (5) zwischen den beiden Schenkeln (6,7) der Leitungseinführung (1) vorgesehen ist und die beiden Schenkel (6,7) in ihrer einen Winkel bildenden Gebrauchslage zur Fixierung dieses Winkels an wenigstens einer Verbindungsstelle verbindbar, vorzugsweise verrastbar sind, **dadurch gekennzeichnet,** daß die Verbindungsstelle(n) (8) zum Fixieren der Winkellage der beiden Winkelschenkel (6,7) seitlich von der Innenseite (9) des Winkels angeordnet ist (sind).

2. Leitungseinführung nach Anspruch 1, dadurch gekennzeichnet, daß die Verbindungsstelle(n) (8) der beiden Winkelschenkel (6,7) in ihrer Gebrauchslage in einer Ebene angeordnet ist (sind), die durch die am weitesten gegenüber der Längsmitte (M) der Leitungseinführung (1) außenliegende Begrenzung (10) der Winkelschenkel (6,7) aufgespannt ist, oder die etwa tangential zu den im Winkel stehenden Innenhöhlungen (4) der im Winkel angeordneten Schenkel (6,7) verläuft, oder die sich zwischen diesen beiden Ebenen befindet.

3. Leitungseinführung nach Anspruch 1 oder 2, dadurch gekennzeichnet, daß beidseits der Längsmittelebene (M) der in Gebrauchslage befindlichen Winkelschenkel (6,7) jeweils eine außenliegende Verbindungsstelle (8) zum Festlegen der Winkelposition vorgesehen ist, wobei die beiden Verbindungsstellen (8) vorzugsweise symmetrisch zu der Längsmittelebene (M) angeordnet sind.

4. Leitungseinführung mit zumindest an ihren Mündungen im Querschnitt etwa kreisförmigen Innenhöhlungen nach einem der Ansprüche 1 bis 3, dadurch gekennzeichnet, daß zumindest das die Innenhöhlung (4) eines Winkelschenkels (6,7) umschließende Gehäuse an seiner etwa tangential zu der Innenhöhlung (4) und parallel zur Längsmitte (M) verlaufenden Wandung in den Bereich der Innenseite des Winkels verlängert und mit Verbindungsmitteln zum Verrasten und/oder Verriegeln der beiden Winkelschenkel versehen ist.

5. Leitungseinführung nach einem der Ansprüche 1 bis 4, dadurch gekennzeichnet, daß das Gehäuse des parallel oder schräg zu einer Gehäuseoberfläche verlaufenden Winkelschenkels (7) in Richtung des in das Gehäuse führenden Winkelschenkels (6) mit seinen Seitenwänden soweit verlängert ist, daß deren Ränder oder Randbereiche (7b) oder die darin einschnappenden oder damit verrastbaren Haltemittel des in das Gehäuse führenden Winkelschenkels (6) in Gebrauchsstellung einen Anschlag gegenüber der Gehäuseoberfläche bilden.

6. Leitungseinführung nach einem der Ansprüche 1 bis 5,dadurch gekennzeichnet,daß die Einschnapp- oder Rastverbindung (8) durch den Anschlag am Gehäuse in ihrer Verschlußlage gesichert ist.

7. Leitungseinführung nach einem der Ansprüche 1 bis 6, dadurch gekennzeichnet, daß im Bereich der etwa parallel zu ihrer Längsmittelebene (M) verlaufenden Seitenwände der Winkelschenkel (6,7) an dem einen Winkelschenkel Ausnehmungen und an dem damit verbindbaren zweiten Winkelschenkel (6) Vorsprünge (12) vorgesehen sind, die beim Verbinden der beiden Winkelschenkel, z.B. durch Zusammenschwenken um eine an ihrer Außenseite befindliche Achse (15) quer zu dem Verlauf ihrer Innenhöhlung (4) und/oder durch Zusammenstecken in einer einen Winkel bildenden Position, ineinanderpassen und gegeneinander festlegbar, vorzugsweise verrastbar oder einschnappbar sind.

8. Leitungseinführung nach einem der Ansprüche 1 bis 7, dadurch gekennzeichnet, daß der Querschnitt der Innenhöhlung (4) oder Bohrung des etwa parallel zur Gehäusewand verlaufenden Winkelschenkels (7), insbesondere eine mündungsseitige Erweiterung mit einem Innengewinde (7a) od.dgl., bis in den Bereich zwischen den beiden Verbindungsstellen (8) und nahe an die Anschlagebene reicht, die in Gebrauchsstellung mit der Gehäuseoberfläche in Berührung ist.

9. Leitungseinführung nach einem der Ansprüche 1 bis 8, dadurch gekennzeichnet, daß ein an der Außenseite des von den beiden Winkelschenkeln gebildeten Winkels liegendes Gelenk oder eine dort angeordnete zusätzliche Verbindungs- oder Kupplungsstelle (16) für die beiden Winkelschenkel gegenüber der Ebene ihrer Trennstelle versetzt ist.

10. Leitungseinführung nach einem der Ansprüche 1 bis 9 , dadurch gekennzeichnet, daß der eine Winkelschenkel als Verbindungsstelle (8) eine randoffene Ausnehmung mit einer Hinterschneidung hat, in welche ein vorzugsweise bündig in diese Ausnehmung passender Vorsprung des anderen Winkelschenkels mit einer Rastnase (12)oder Einschnappnase Entsprechend der Hinterschneidung einschwenkbar oder einschiebbar ist.

11. Leitungseinführung nach einem der Ansprüche 1 bis 10, dadurch gekennzeichnet, daß der Winkelschenkel, dessen Innenhöhlung (4) etwa parallel zur Gehäuseoberfläche verläuft und dessen Seitenwände bis nahe an die Gehäuseoberfläche verlängert sind, nach außen offene, Hinterschneidungen bildende Ausnehmungen und der andere Winkelschenkel (6) dazu passende Nasen (12) hat.

12. Leitungseinführung nach Anspruch 10 oder 11, dadurch gekennzeichnet, daß die Ausnehmungen an der Verbindungsstelle (8) schräg und ggf. parallel zur Trennstelle (5) der beiden Winkelschenkel (6,7) verläuft und der die Rastnasen (12) jeweils aufweisende Schenkel den mit der Ausnehmung versehenen Bereich der Seitenwand außen übergreift.

13. Leitungseinführung nach einem der Ansprüche 1 bis 12 dadurch gekennzeichnet, daß die Verlängerung der Außenwand des etwa parallel zur Oberseite eines Gehäuses verlaufenden Winkelschenkels (7) nach innen gerichtete Rastnasen (12) od.dgl.hat, daß die verlängerten Außenwände den Kupplungsbereich (8) des quer zur Gehäuseoberfläche in diese führenden Winkelschenkels (6) übergreifen und die Rastnasen (12) in an diesem letztgenannten Winkelschenkel (6) befindliche, vorzugsweise Hinterschneidungen aufweisende Ausnehmungen passen.

14. Leitungseinführung (1) nach einem der vorstehenden Ansprüche, bei welcher die beiden Winkelschenkel (6,7) ohne gegenseitige Verbindung auf ein Kabel (2) od.dgl. aufsteckbar und in Gebrauchsstellung des Kabels (2) miteinander kuppelbar sind nach einem der vorstehenden Ansprüche, dadurch gekennzeichnet, daß an den Außenwänden insbesondere im Bereich der Trennstelle (5), ggf. auch an der Außenseite der beiden winklig zueinander angeordneten Winkelschenkel quer zum Verlauf von deren Innenhöhlungen Verbindungsstellen (8), insbesondere Rastkupplungen vorgesehen sind und daß der in Gebrauchsstellung etwa parallel zur Gehäuseoberfläche verlaufende Winkelschenkel (7) nach dem Befestigen des anderen Winkelschenkels (6) an dem Gehäuse auf dem abgebogenen Kabel (2) etwa parallel zur Gehäuseoberfläche gegen die Trennstelle (5) des mit dem Gehäuse verbundenen Winkelschenkels (6) verschiebbar und verrastbar ist.

15. Leitungseinführung nach Anspruch 14, dadurch gekennzeichnet, daß zusätzlich zu den verrastbaren Verbindungsstellen (8,16) in Richtung des parallel zur Gehäuseoberfläche verlaufenden Winkelschenkels (7) Schiebeführungen (17) an den beiden Winkelschenkeln (6,7) vorgesehen sind, die die beiden Winkelschenkel bei ihrem Zusammenschieben und in Gebrauchsstellung führen und verbinden.

16. Leitungseinführung nach Anspruch 14 oder 15, dadurch gekennzeichnet, daß die Schiebeführungen (17) zwischen den beiden in winkliger Position zueinander zusammenschiebbaren Winkelschenkeln (6,7) durch in den Außenwänden des verschiebbaren Winkelschenkels (7) befindliche Nuten (18) un darin eingreifende, voneinander wegweisende Vorsprünge (19) oder Leisten des anderen Winkelschenkels (6) gebildet sind.

17. Leitungseinführung nach Anspruch 1, dadurch gekennzeichnet, daß die Verbindungsstelle (8) eine quer zum Bohrungsverlauf liegende Raste (20) an dem in Gebrauchsstellung an der Gehäuseoberseite anliegenden Anschlagbereich der Leitungseinführung (1) ist.

18. Leitungseinführung nach Anspruch 1 oder 7, dadurch gekennzeichnet, daß ein mit einem Rastvorsprung (12) versehener Schenkel (21) von dem quer zum Gehäuse verlaufenden, an diesem befestigbaren Winkelschenkel (6) ausgehend etwa parallel zur Gehäuseoberfläche in Richtung des zweiten Winkelschenkels (7) ragt, der vorzugsweise verschwenkbar mit dem ersten Winkelschenkel verbunden ist und eine zu dem Rastvorsprung (12) passende Ausnehmung hat.

19. Leitungseinführung nach Anspruch 1 oder 17, dadurch gekennzeichnet, daß eine beim Verrasten etwas nachgiebige den Rastvorsprung (12) aufweisende Zunge (21) an dem parallel zur Gehäuseoberfläche verlaufende Winkelschenkel angeordnet ist und beim Einschwenken in die Gebrauchslage mit einer Rastausnehmung des anderen Winkelschenkels in Wirkverbindung tritt.

20. Leitungseinführung nach einem der vorstehenden Ansprüche, dadurch gekennzeichnet, daß einer der beiden durch eine Schwenkverbindung (15) an der Außenseite verbundenen Winkelschenkel an der Trennstelle, vorzugsweise am der Schwenkverbindung entgegengesetzten Ende der Trennstelle (5) gegenüber der Trennstelle vorstehende Lappen (11,21) mit Rastvorsprüngen (12) und der andere Winkelschenkel Einsenkungen mit Rastausnehmungen aufweist.

21. Leitungseinführung mit schwenkbar verbundenen oder verbindbaren Winkelschenkein nach einem der vorstehenden Ansprüche, dadurch gekennzeichnet, daß zum Kuppeln der beiden Winkelschenkel (6,7) im Bereich ihrer an der Außenseite des von ihnen gebildeten Winkels befindlichen Schwenkachse (15) mit ihrer Lagerung (25) die Schwenkachse (15) in quer zur Lagerung (25) offene Schlitze (26) einschiebbar ist und die Schieberichtung vorzugsweise in Orientierungsrichtung des die Schwenkachse (15) aufweisenden Winkelschenkels und quer zur Orientierungsrichtung des anderen Winkelschenkels verläuft.

22. Leitungseinführung nach Anspruch 21, dadurch gekennzeichnet, daß zur Verbindung der beiden Winkelschenkel in ihrer winkligen Gebrauchslage eine in Richtung der Schiebebewegung beim Kuppeln der Schwenkachse (15) mit der Lagerung (25) verlaufende Schnappoder Rastverbindung vorgesehen ist, die einerseits an dem einen Schenkel und andererseits an einem Vorsprung (21) des anderen Schenkels angeordnet ist.

23. Leitungseinführung nach Anspruch 21 oder 22, dadurch gekennzeichnet, daß der Vorsprung (21) des einen Winkelschenkels mit Schnappoder Rastverbindung an dem Winkelschenkel (6) etwa rechtwinklig zum Verlauf von dessen Innenhöhlung angeordnet ist, der quer zur Gehäuseoberfläche an dieser befestigbar ist und vorzugsweise in Gebrauchsstellung einen im Bereich der Gegen-Schiebeführung des anderen Winkelschenkels (7) befindlichen Ausschnitt (27) in Gebrauchsstellung abschließt.

24. Winkelförmige Leitungseinführung nach einem der vorstehenden Ansprüche, dadurch gekennzeichnet, daß der eine Winkelschenkel (6) zwei miteinander fluchtende, aber beabstandete Lageraugen (28) hat, die einseitig entgegen der Schieberichtung beim Zusammenfügen geschlitzt und etwas nachgiebig sind, und daß der zweite Winkelschenkel (7) einen in seiner Breite gleich oder kleiner als der lichte Abstand der beiden Lageraugen (28) bemessenen Vorsprung (29) hat, von welchem zwei miteinander fluchtende Lagerzapfen (30) vorzugsweise gleichen Querschnittes seitlich vorstehen, deren Querschnitt die Breite der Schlitze (26) der Lageraugen (28) insbesondere übertrifft, und daß die Lagerzapfen (30) durch die Schlitze (26) in die Lageraugen (28) einsteckbar und damit verrastbar sind.

25. Leitungseinführung nach einem der Ansprüche 21 bis 24, dadurch gekennzeichnet, daß die Lageraugen (28) innerhalb des Gehäuses des einen Winkelschenkels (6) nach den in Verlängerung der Lagerzapfen (30) befindlichen Außenseiten geschlossen angeordnet sind.

26. Leitungseinführung nach einem der Ansprüche 21 bis 25, dadurch gekennzeichnet, daß die Einführschlitze (26) für die Lagerzapfen (30) in die Lageraugen (28) auf der der Innenhöhlung (4) des die Lagerzapfen (30) aufweisenden Winkelschenkels (7) zugewandten Seite angeordnet sind.

27. Leitungseinführung nach einem der Ansprüche 21 bis 26, dadurch gekennzeichnet, daß die Lagerzapfen (30) einstückig mit dem Haltervorsprung (29) des Winkelschenkels (7) verbunden sind.

28. Leitungseinführung nach einem der Ansprüche 21 bis 27, dadurch gekennzeichnet, daß der an der Gehäuseoberfläche anbringbare Winkelschenkel (6) die Lageraugen (28) und der andere, etwa parallel zur Gehäuseoberfläche anzuordnende Winkelschenkel (7) die Lagerzapfen (30) aufweist.

29. Leitungseinführung nach einem der Ansprüche 21 bis 28, dadurch gekennzeichnet, daß die Lageraugen (28) dem Winkelschenkel (6) einstückig angeformt sind und zumindest dieser Winkelschenkel (6) aus federnd elastischem Kunststoff besteht.

30. Leitungseinführung nach einem der Ansprüche 1 bis 29, dadurch gekennzeichnet, daß die Lagerzapfen (30) und die Lageraugen (28) in zusammengefügter Kupplungsstellung unter Reibkraft und/oder überwindbarer Rastkraft ineinandergreifen und die Winkelschenkel (6,7) in beliebigen Schwenkstellungen relativ zueinander durch Friktion und/oder lösbare Verrastungen feststellbar sind.

31. Leitungseinführung nach einem der Ansprüche 1 bis 30, dadurch gekennzeichnet, daß der Querschnitt der Lagerzapfen (30) den Innenquerschnitt der etwas nachgiebigen Lageraugen (28) so übertrifft, daß die Verschwenkung der beiden Winkelschenkel nur unter Reibung im Lager durchführbar ist.

32. Leitungseinführung nach einem der Ansprüche 1 bis 31, dadurch gekennzeichnet, daß die Lagerzapfen (30) und/oder der Bereich des die Lagerzapfen (30) aufweisende Vorsprung, von welchem die Lagerzapfen (30) ausgehen, eine Zahnung und das Lagerauge (28) oder seine innere Stirnseite eine Gegenzahnung hat, wobei die Zahnungen in Gebrauchsstellung in lösbare Rastverbindung zueinander treten.

33. Leitungseinführung nach einem der Ansprüche 1 bis 32, dadurch gekennzeichnet, daß die Berührflächen der beiden Schenkel (6,7) formschlüssig ineinander passende Stufen (22) haben und/oder als Nut- und Federverbindung (23,24) ausgebildet sind.

34. Leitungseinführung nach dem Oberbegriff von Anspruch 1, dadurch gekennzeichnet, daß am Außenrand der an der Trennstelle (5) in Gebrauchsstellung ineinander übergehenden Innenhöhlungen (4) der beiden Winkelschenkel (6,7) an der Trennstelle (5) selbst eine Einschnapp-oder Rastverbindung vorgesehen ist.

35. Leitungseinführung nach Anspruch 34, dadurch gekennzeichnet, daß die Einschnapp- oder Rastmittel der Verbindung am Umfang der Innenhöhlungen (4) der Winkelschenkel (6,7) verteilt oder umlaufend angeordnet sind.

36. Leitungseinführung nach einem der Ansprüche 1 oder 33 bis 35, dadurch gekennzeichnet, daß die an den Berührflächen der Winkelschenkel (6,7) vorgesehenen Stufen (22) oder Nut- und Federverbindung derart hinterschnitten sind, daß sie ineinander verrastbar oder einschnappbar sind.

37. Leitungseinführung nach einem der vorstehenden Ansprüche, dadurch gekennzeichnet, daß wenigstens einer der Lagerzapfen (30) in axialer Richtung insbesondere gegen eine Rückstellkraft wenigstens teilweise in den ihn aufweisenden Vorsprung (29) des Winkelschenkels (7) zum Vorbeiführen des Lagerauges (28) beim Herstellen der Schwenkverbindung der beiden Winkelschenkel (6,7) verschiebbar ist.

38. Leitungseinführung nach Anspruch 27, dadurch gekennzeichnet, daß beide Lagerzapfen in axialer Richtung gegen eine Rückstellkraft aufeinander zu verschiebbar sind.

39. Leitungseinführung nach Anspruch 37 oder 38, dadurch gekennzeichnet, daß die beiden voneinander wegweisenden, koaxial angeordneten Lagerzapfen bereichsweise an den einander zugewandten Stirnseiten teleskopartig ineinandergreifen und gegen eine Rückstellkraft ineinander und in den Vorsprung (29) verschiebbar sind.

40. Leitungseinführung nach einem der Ansprüche 37 bis 39, dadurch gekennzeichnet, daß zur Erzeugung der Rückstellkraft für den/die axial verschiebbaren Lagerzapfen (30) eine Druckfeder (33) im Verschiebeweg des Lagerzapfens (30) im Inneren des Vorsprunges (29) vorgesehen ist.

**Claims**

1. An angular apparatus (1) for threading conductors, particularly an elbow, for leading conductors, tubes or cables (2) at an angle into a housing or the like, the cable (2) or the like running slantwise or parallel to the housing surface and entering said housing approximately at right angles or slantwise, and the bending area (3) of the cable (2) or the like being surrounded by an inside cavity (4) of said apparatus (1), in the angular area of said apparatus (1) there being a point of separation (5) between the two legs (6,7) of said apparatus (1) and to fix the angle composed by the two legs (6,7) in their position of use said legs being adapted to be connected, preferably to be latched at at least one connecting location, **characterized in that** the connecting location-(s) (8) for fixing the angular position of the two angle legs (6,7) is (are) arranged at the side of the inside (9) of the angle.

2. An apparatus for threading conductors as claimed in claim 1, characterized in that the connecting location(s) (8) of the two angle legs (6,7) in their position of use is (are) arranged in a plane which is set through that limit (10) of the angle legs (6,7) which is outermost relative to the longitudinal centre (M) of said apparatus, or which plane runs approximately tangentially to the angled inside cavities (4) of the legs (6,7) arranged at an angle, or is located between said two planes.

3. An apparatus for threading conductors as claimed in claim 1 or claim 2, characterized in that on both sides of the longitudinal centre plane (M) of the angle legs (6,7) situated in the position of use there is in each case an external connecting location (8) provided for fixing the angular position, the two connecting locations (8) being arranged preferably symmetrically to the longitudinal centre plane (M).

4. An apparatus for threading conductors having inside cavities approximately circular in cross section at least at their openings, as claimed in any one of claims 1 to 3, characterized in that at least the housing surrounding the inside cavity (4) of one angle leg (6,7) is extended at the housing wall running approximately tangentially to the inside cavity (4) and parallel to the longitudinal centre (M), said extension passing into the area of the inside of the angle, and is provided with connecting means for latching and/or locking the two angle legs.

5. An apparatus for threading conductors as claimed in any one of claims 1 to 4, characterized in that the housing of the angle leg (7) running parallel or slantwise to a housing surface is extended with the side walls thereof so far in the direction of the angle leg (6) leading into the housing that the edges or edge areas (7b) of said side walls or the retention means which snap into or latch together with them and belong to the angle leg (6) leading into the housing form a stop relative to the housing surface in the position of use.

6. An apparatus for threading conductors as claimed in any one of claims 1 to 5, characterized in that the connection (8) established by snap or latch action is secured in its locking position by the stop against the housing.

7. An apparatus for threading conductors as claimed in any one of claims 1 to 6, characterized in that in the area of the side walls which belong to the angle legs (6,7) and run approximately parallel to the longitudinal centre plane (M) of said apparatus there are recesses provided on the one angle leg and projections (12) provided on the second angle leg (6) connectable thereto, said recesses and projections fitting together and being fixable relative to one another, preferably adapted for latch or snap action, as the two angle legs are connected, e.g. by swinging together about a peripheral axis (15) transversal to the path of their inside cavity (4) and/or by intermating in a position forming an angle.

8. An apparatus for threading conductors as claimed in any one of claims 1 to 7, characterized in that the cross section of the inside cavity (4) or hole of the angle leg (7) running approximately parallel to the housing wall, particularly a mouthing having an inside thread (7a) or the like, reaches into the area between the two connecting locations (8) and close to the stop plane in contact with the housing surface in the position of use.

9. An apparatus for threading conductors as claimed in any one of claims 1 to 8, characterized in that a link lying at the outside of the angle formed by the two angle legs, or an additional connecting or coupling location (16) arranged there for the two angle legs, is offset relative to the plane of their point of separation.

10. An apparatus for threading conductors as claimed in any one of claims 1 to 9, characterized in that the one angle leg has as a connecting location (8) an open-ended recess with an undercut, a projection of the other angle leg preferably snugly fitting said recess and being swingable or slidable into said recess with a latch (12) or snap-in projection corresponding to the undercut.

11. An apparatus for threading conductors as claimed in any one of claims 1 to 10, characterized in that the angle leg, the inside cavity (4) of which runs approximately parallel to the housing surface and the side walls of which are extended close to the housing surface, has outwardly open recesses forming undercuts and the other angle leg (6) has matching projections (12).

12. An apparatus for threading conductors as claimed in claim 10 or claim 11, characterized in that the recesses at the connecting location (8) run slantwise and possibly parallel to the point of separation (5) of the two angle legs (6,7) and the leg presenting the latches (12) outwardly laps over the side wall area provided with the recess.

13. An apparatus for threading conductors as claimed in any one of claims 1 to 12, characterized in that the extension of the outer wall of the angle leg (7) running approximately parallel to the housing surface has inwardly directed latches (12) or the like, that the extended outer walls lap over the coupling area (8) of the angle leg (6) leading at right angles into the housing surface and the latches (12) fit in recesses which are located at said latter angle leg (6) and preferably have undercuts.

14. An apparatus (1) for threading conductors as claimed in any one of the preceding claims, wherein the not interconnected two angle legs (6,7) are adapted to be slipped on a cable (2) or the like and in the position of use of the cable (2) are adapted to be coupled together as claimed in any one of the preceding claims, characterized in that at the outer walls particularly in the area of the point of separation (5), possibly also at the outside of the two angle legs arranged at an angle to each other, there are connecting locations (8), particularly latching means, provided transversely to the path of the inside cavities of said angle legs, and that after angle leg (6) has been affixed to the housing, the angle leg (7) which in the position of use runs approximately parallel to the housing surface is displaceable on the bent cable (2) approximately parallel to the housing surface, towards the point of separation (5) of the angle leg (6) connected to the housing and is latchable.

15. An apparatus for threading conductors as claimed in claim 14, characterized in that in addition to the latchable connecting locations (8, 16) there are provided on the two angle legs (6,7) slideways (17) in the direction of the angle leg (7) running parallel to the housing surface, said slideways guiding and connecting the two angle legs as they are pushed together and in the position of use.

16. An apparatus for threading conductors as claimed in claim 14 or claim 15, characterized in that the slideways (17) between the two angle legs (6,7) adapted to be pushed together into an angular position to each other are formed by grooves (18) situated in the outer walls of the displaceable angle leg (7) and projections (19) or ledges of the other angle leg (6) which engage with said grooves and are directed away from one another.

17. An apparatus for threading conductors as claimed in claim 1, characterized in that the connecting location (8) is a catch (20) which lies transversely to the path of the hole and is on the stop area of said apparatus (1), which stop area rests against the housing surface in the position of use.

18. An apparatus for threading conductors as claimed in claim 1 or claim 7, characterized in that departing from the angle leg (6) which runs transversely to and affixable to the housing, a leg (21) provided with a latch (12) projects approximately parallel to the housing surface in the direction of the second angle leg (7), said angle leg preferably being connected in a swingable condition to the first angle leg and having a recess matching the latch (12).

19. An apparatus for threading conductors as claimed in claim 1 or claim 17, characterized in that a tongue (21) which presents the latch (12) and is somewhat flexible upon latching is arranged at the angle leg running parallel to the housing surface and when the angle leg is swung into the position of use enters into operative connection with an arresting recess of the other angle leg.

20. An apparatus for threading conductors as claimed in any one of the preceding claims, characterized in that one of the two angle legs connected at the outside by a swivel joint (15) has at the point of separation, preferably at that end of the point of separation (5) which is opposed to the swivel joint, lugs (11, 21) projecting relative to the point of separation with arresting projections (12) and the other angle leg has depressions with arresting recesses.

21. An apparatus for threading conductors, including angle legs which are connected or are connectable in a swingable condition, as claimed in any one of the preceding claims, characterized in that for coupling the two angle legs (6,7) in the area of their swivel pin (15) and bedding thereof (25) situated at the outside of the angle they form, the swivel pin (15) is slidable into slots (26) open transversely to the bedding (25) and the sliding direction preferably runs in the direction of orientation of the angle leg presenting the swivel pin (15) and transversely to the direction of orientation of the other angle leg.

22. An apparatus for threading conductors as claimed in claim 21, characterized in that to connect the two angle legs in their angular position of use a connection established by snap or latch action is provided which runs in the direction of the sliding movement when the swivel pin (15) is coupled to the bedding (25) and is arranged on the one side on the one leg and on the other side on a projection (21) of the other leg.

23. An apparatus for threading conductors as claimed in claim 21 or claim 22, characterized in that the projection (21) of the one angle leg having a connection established by snap or latch action is arranged on the angle leg (6) approximately at right angles to the path of the inside cavity thereof, said projection being fixable on the housing surface transversely thereto and in the position of use preferably closing a cutaway portion (27) situated in the area of the mating slideway of the other angle leg (7).

24. An angular apparatus for threading conductors as claimed in any one of the preceding claims, characterized in that the one angle leg (6) has two eyes (28) which are in alignment with each other but are spaced, said eyes being slit on one side towards the sliding direction during joining and are somewhat flexible, and that the second angle leg (7) has a projection (29) dimensioned in its width to be equal to or smaller than the clearance of the two eyes (28), projecting laterally from said projection there being two journals (30) in alignment with each other and preferably of equal cross section, the cross section thereof particularly surpassing the width of the slots (26) of the eyes (28), and that the journals (30) are insertable through the slots (26) into the eyes (28) and are latchable therewith.

25. An apparatus for threading conductors as claimed in any one of claims 21 to 24, characterized in that the eyes (28) within the housing of the one angle leg (6) are arranged so as to be closed after the outsides situated in extension of the journals (30).

26. An apparatus for threading conductors as claimed in any one of claims 21 to 25, characterized in that the slots (26) for introducing the journals (30) into the eyes (28) are arranged on that side which faces the inside cavity (4) of the angle leg (7) presenting the journals (30).

27. An apparatus for threading conductors as claimed in any one of claims 21 to 26, characterized in that the journals (30) are integrally connected to the retaining projection (29) of the angle leg (7).

28. An apparatus for threading conductors as claimed in any one of claims 21 to 27, characterized in that the angle leg (6) attachable to the housing surface presents the eyes (28) and the other angle leg (7) to be arranged approximately parallel to the housing surface presents the journals (30).

29. An apparatus for threading conductors as claimed in any one of claims 21 to 28, characterized in that the eyes (28) are integrally formed with the angle leg (6) and at least said angle leg (6) consists of springily elastic plastics.

30. An apparatus for threading conductors as claimed in any one of claims 1 to 29, characterized in that the assembled coupling position the journals (30) and the eyes (28) interengage under friction force and/or surmountable arresting force and the angle legs (6,7) are fixable in any swivel position relative to each other by friction and/or disconnectable latching means.

31. An apparatus for threading conductors as claimed in any one of claims 1 to 30, characterized in that the cross section of the journals (30) surpasses the internal cross section of the slightly flexible eyes (28) such that the swivel movements of the two angle legs can be performed only under friction in the bearing.

32. An apparatus for threading conductors as claimed in any one of claims 1 to 31, characterized in that the journals (30) and/or that area of the projection presenting the journals (30) from which the journals (30) depart has a toothing and the eye (28) or the inner face thereof has a mating toothing, in the position of use the toothing systems becoming releasably interlocked.

33. An apparatus for threading conductors as claimed in any one of claims 1 to 32, characterized in that the contact faces of the two legs (6,7) have steps (22) nesting with a form-fit and/or take the form of a tongue-and-groove joint (23, 24).

34. An apparatus for threading conductors according to the preamble of claim 1, characterized in that at the outer edge of the inside cavities (4) which form part of the two angle legs (6,7) and in the position of use merge at the point of separation (5) there is a connection established by snap or latch action provided at the point of separation (5) itself.

35. An apparatus for threading conductors as claimed in claim 34, characterized in that the snapping or latching means of the joint are distributed at the periphery of the inside cavities (4) of the angle legs (6,7) or are arranged continuously.

36. An apparatus for threading conductors as claimed in claim 1 or in any one of claims 33 to 35, characterized in that the steps (22) or tongue-and-groove joint provided at the contact faces of the angle legs (6,7) are undercut in such a way as to be latchable or adapted to snap into one another.

37. An apparatus for threading conductors as claimed in any one of the preceding claims, characterized in that for the eye (28) to pass as the swivel joint of the two angle legs (6,7) is established at least one of the journals (30) is slidable in the axial direction, particularly against a restoring force, at least partly into that projection (29) of the angle leg (7) which presents said journal.

38. An apparatus for threading conductors as claimed in claim 27, characterized in that both journals are slidable towards each other in the axial direction against a restoring force.

39. An apparatus for threading conductors as claimed in claim 37 or claim 38, characterized in that the two coaxially arranged journals pointing away from each other mate telescopically in areas at the confronting faces and are slidable into each other and into the projection (29) against a restoring force.

40. An apparatus for threading conductors as claimed in any one of claims 37 to 39, characterized in that to generate the restoring force for the axially slidable journal(s) (30) a compression spring (33) is provided in the sliding path of the journal (30) inside the projection (29).

## Revendications

1. Entrée angulaire de conducteur ou de canalisation (1), en particulier coude tubulaire, pour introduire des conducteurs électriques, des tuyaux souples ou des câbles (2) sous un angle dans un boîtier ou analogue, dans une disposition où le câble (2) ou analogue s'étend obliquement ou parallèlement à la face du boîtier et pénètre à peu près à angle droit ou obliquement dans celui-ci, et dans laquelle la zone de courbure (3) du câble (2) ou analogue est entourée par une cavité interne (4) de l'entrée de conducteur (1), un point de division (5) est prévu entre les deux branches (6, 7) de l'entrée de conducteur (1) dans la zone d'angle de l'entrée de conducteur (1), et les deux branches (6, 7), lorsqu'elles occupent leur position d'utilisation où elles renferment un angle entre elles, peuvent être assemblées, de préférence à cran, en au moins un point de liaison pour fixer cet angle, caractérisée en ce que le ou les points (8) de liaison pour fixer la position angulaire relative des deux branches (6, 7), est placé ou sont placés latéralement par rapport au côté intérieur (9) de l'angle.

2. Entrée de conducteur selon la revendication 1, caractérisée en ce que le ou les points de liaison (8) des deux branches (6, 7) à leur position d'utilisation, est ou sont placé(s) dans un plan sous-tendu par la délimitation (16) des branches (6, 7) située le plus à l'extérieur par rapport au plan longitudinal médian (M) de l'entrée de conducteur (1), ou qui s'étend à peu près tangentiellement aux cavités internes (4) faisant un angle entre elles des branches (6, 7) disposées ellesmêmes sous un angle l'une par rapport à l'autre, ou dans un plan situé entre ces deux plans.

3. Entrée de conducteur selon la revendication 1 ou 2, caractérisée en ce qu'un point de liaison (8) situé à l'extérieur, est prévu de part et d'autre du plan longitudinal médian (M) des branches (6, 7) en position d'utilisation, en vue du blocage de leur position angulaire relative, les deux points de liaison (8) étant placés de préférence symétriquement par rapport au plan longitudinal médian (M).

4. Entrée de conducteur possédant, tout au moins à ses embouchures, des cavités internes de section droite à peu près circulaire, selon une des revendications 1 à 3, caractérisée en ce que le corps entourant la cavité interne (4) d'au moins une branche (6, 7), est prolongé et pourvu de moyens de liaison pour l'assemblage à cran et/ou le verrouillage des deux branches sur sa paroi s'étendant à peu près tangentiellement à la cavité interne (4) et parallèlement au plan longitudinal médian (M), dans la région du côté intérieur de l'angle.

5. Entrée de conducteur selon une des revendications 1 à 4, caractérisée en ce que le corps de la branche (7) s'étendant parallèlement ou obliquement par rapport à une face du boîtier, est prolongé, par ses parois latérales, en direction de la branche (6) menant à l'intérieur du boîtier, au point que ses bords ou zones marginales (7b), ou les moyens de retenue pouvant être encliquetés en eux ou pouvant être assemblés à cran à eux et faisant partie de la branche (6) menant à l'intérieur du boîtier, forment une butée vis-à-vis de la face du boîtier en position d'utilisation.

6. Entrée de conducteur selon une des revendications 1 à 5, caractérisée en ce que la liaison (8) à encliquetage ou à cran est verrouillée à sa position fermée par l'application contre le boîtier.

7. Entrée de conducteur selon une des revendications 1 à 6, caractérisée en ce que des évidements ou crans sont prévus dans la zone des parois latérales s'étendant à peu près parallèlement au plan longitudinal médian (M) d'une des branches (6, 7) et des saillies ou dents (12) sont prévues dans la zone des parois latérales s'étendant à peu près parallèlement au plan longitudinal médian (M) de la seconde branche (6, 7), pouvant être assemblée à la première, crans et dents qui, lors de l'assemblage des deux branches, par exemple par pivotement autour d'un axe (15) situé sur leur côté extérieur et orienté transversalement à l'étendue de leur cavité interne (4), de manière que les deux branches s'appliquent l'une contre l'autre, et/ou par l'emboîtement mutuel des deux branches à une position où elles renferment un angle entre elles, s'ajustent les uns dans les autres et peuvent être bloqués les uns par rapport aux autres, de préférence par une fixation à cran ou par un encliquetage.

8. Entrée de conducteur selon une des revendications 1 à 7, caractérisée en ce que la section droite de la cavité interne (4) ou du perçage de la branche (7) s'étendant à peu près parallèlement à la paroi du boîtier, en particulier un élargissement prévu du côté de l'embouchure et pourvu d'un filetage intérieur (7a) ou analogue, s'étend jusque dans la zone entre les deux points de liaison (8) et à proximité du plan de butée qui est en contact avec la face du boîtier en position d'utilisation.

9. Entrée de conducteur selon une des revendications 1 à 8, caractérisée en ce qu'une articulation située sur le côté extérieur de l'angle formé par les deux branches, ou un point de liaison ou d'accouplement (16) supplémentaire disposé à cet endroit pour les deux branches, est décalé par rapport au plan de leur point de division.

10. Entrée de conducteur selon une des revendications 1 à 9, caractérisée en ce que l'une des branches présente, en tant que point de liaison (8), un évidement ou cran s'ouvrant dans le bord de la branche et possédant une contre-dépouille, dans lequel peut être engagée, par une dent d'arrêt (12) ou d'encliquetage, au moyen d'un pivotement ou d'un coulissement, une saillie de l'autre branche, saillie qui s'ajuste de préférence à fleur dans ce cran et dont la dent d'arrêt (12) ou d'encliquetage correspond à la contre-dépouille.

11. Entrée de conducteur selon une des revendications 1 à 10, caractérisée en ce que la branche dont la cavité interne (4) s'étend à peu près parallèlement à la face du boîtier et dont les parois latérales sont prolongées jusqu'à proximité de cette face, possède des évidements ou crans ouverts vers l'extérieur et formant des contre-dépouilles, et l'autre branche (6) possède des dents (12) complémentaires à ces crans.

12. Entrée de conducteur selon la revendication 10 ou 11, caractérisée en ce que les crans des points de liaison (8) s'étendent obliquement et, éventuellement, parallèlement au point de division (5) des deux branches (6, 7), et la branche possédant les dents d'arrêt (12) s'étend extérieurement par-dessus la zone de la paroi latérale présentant les crans de l'autre branche.

13. Entrée de conducteur selon une des revendications 1 à 12, caractérisée en ce que le prolongement de la paroi externe de la branche (7) s'étendant à peu près parallèlement à la face de dessus d'un boîtier, porte des dents d'arrêt (12) ou analogues dirigées vers l'intérieur, que les parois externes prolongées s'étendent par-dessus la zone d'accouplement (8) de la branche (6) s'étendant perpendiculairement à la face du boîtier et menant à l'intérieur de celui-ci, et que les dents d'arrêt (12) s'ajustent dans des crans situés sur la branche (6) mentionnée en dernier et possédant de préférence des contre-dépouilles.

14. Entrée de conducteur (1) selon une des revendications précédentes, dont les deux branches (6, 7) peuvent être enfilées sans liaison mutuelle, sur un câble (2) ou analogue et sont accouplables entre elles à la position d'utilisation du câble (2), selon une des revendications précédentes, caractérisée en ce que des points de liaison (8), en particulier des accouplements à cran, sont prévus sur les parois externes, notamment dans la zone du point de division (5) et éventuellement aussi sur le côté extérieur des deux branches disposées sous un angle l'une par rapport à l'autre, transversalement à l'étendue de leurs cavités internes, et que la branche (7) s'étendant en position d'utilisation à peu près parallèlement à la face du boîtier, après la fixation de l'autre branche (6) au boîtier, peut être glissée sur le câble (2) recourbé, à peu près parallèlement à la face du boîtier, en direction du point de division (5) avec la branche (6) reliée au boîtier, et peut être assemblée à cran avec cette branche reliée au boîtier.

15. Entrée de conducteur selon la revendication 14, caractérisée en ce que, en plus des points de liaison à cran (8, 16), des guides pour le coulissement (17) sont prévus sur les deux branches (6, 7), en direction de la branche (7) s'étendant parallèlement à la face du boîtier, qui guident et réunissent les deux branches lorsqu'elles sont glissées l'une contre l'autre et à la position d'utilisation.

16. Entrée de conducteur selon la revendication 14 ou 15, caractérisée en ce que les guides pour le coulissement (17) entre les deux branches (6, 7), pouvant être glissées l'une contre l'autre en position angulaire, sont constitués par des rainures (18) situées dans les parois externes de la branche (7) que l'on peut faire glisser, ainsi que par des saillies (19) ou languettes disposées sur l'autre branche (6), orientées suivant des directions opposées et pénétrant dans ces rainures.

17. Entrée de conducteur selon la revendication 1, caractérisée en ce que le point de liaison (8) est formé par un dispositif d'arrêt (20) orienté transversalement à l'étendue du perçage et situé dans la zone de butée de l'entrée de conducteur (1) appliquée en position d'utilisation contre la face de dessus du boîtier.

18. Entrée de conducteur selon la revendication 1 ou 7, caractérisée en ce que la branche (6) s'étendant perpendiculairement au boîtier et pouvant être fixée à celui-ci, comporte une aile (21), pourvue d'une saillie d'arrêt (12), s'étendant en direction de la seconde branche (7), cette dernière étant de préférence reliée pivotante à la première branche et possédant un évidement ou cran complémentaire à la saillie d'arrêt (12).

19. Entrée de conducteur selon la revendication 1 ou 17, caractérisée en ce qu'une languette (21), présentant une saillie d'arrêt (12) qui est légèrement élastique lors de l'assemblage à cran, est disposée sur la branche s'étendant parallèlement à la face du boîtier et entre en liaison de coopération avec un cran de l'autre branche lors du pivotement vers cette autre branche à la position d'utilisation.

20. Entrée de conducteur selon une des revendications précédentes, caractérisée en ce que l'une des deux branches, reliées entre elles sur le côté extérieur par une liaison permettant le pivotement ou charnière (15), présente, au point de division, de préférence à l'extrémité du point de division (5) opposée à la charnière, des pattes (11, 21) qui font saillie par rapport au point de division et portent des saillies d'arrêt (12), tandis que l'autre branche présente des creux avec des crans.

21. Entrée de conducteur comportant des branches reliées ou pouvant être reliées de façon à permettre leur pivotement relatif, selon une des revendications précédentes, caractérisée en ce que, pour l'accouplement des deux branches (6, 7) dans la région de leur axe de pivotement (15) avec son logement (25), prévus sur le côté extérieur de l'angle formé par les branches, on peut faire glisser l'axe (15) dans des fentes (26) ouvertes transversalement au logement (25), la direction de glissement s'étendant de préférence dans la direction d'orientation de la branche portant l'axe de pivotement (15) et transversalement à la direction suivant laquelle est orientée l'autre branche.

22. Entrée de conducteur selon la revendication 21, caractérisée en ce que, pour assembler les deux branches à leur position d'utilisation où elles renferment un angle entre elles, on a prévu un dispositif d'assemblage à encliquetage ou à cran, dispositif qui s'étend suivant direction du mouvement de glissement lors de l'accouplement de l'axe de pivotement (15) avec le logement (25), et qui est prévu d'une part sur une branche et d'autre part sur une saillie (21) de l'autre branche.

23. Entrée de conducteur selon la revendication 21 ou 22, caractérisée en ce que la saillie (21) de la branche portant le dispositif de liaison à encliquetage ou à cran, s'étend à peu près à angle droit par rapport à la cavité interne de la branche (6) pouvant être fixée à angle droit par rapport à la face du boîtier sur ce dernier, et ferme de préférence, en position d'utilisation, une échancrure (27) située dans la zone du guidage antagoniste pour le glissement de l'autre branche (7).

24. Entrée de conducteur angulaire selon une des revendications précédentes, caractérisée en ce qu'une branche (6) possède deux charnons (28) mutuellement alignés mais espacés l'un de l'autre, qui sont fendus d'un côté, en sens contraire à la direction de glissement lors de l'assemblage, et légèrement élastiques, que la seconde branche (7) possède une saillie ou avancée (29) dont la largeur est égale ou inférieure à la distance libre entre les deux charnons (28), d'où dépassent latéralement deux tourillons (30) mutuellement alignés et ayant de préférence la même section droite, laquelle est notamment supérieure à la section des fentes (26) des charnons (28), et que les tourillons (30) peuvent être engagés à travers les fentes (26) dans les charnons (28) et retenus à cran dans ceux-ci.

25. Entrée de conducteur selon une des revendications 21 à 24, caractérisée en ce que les charnons (28) sont disposés à l'intérieur du corps d'une branche (6) et sont fermés sur les côtés extérieurs situés dans le prolongement des tourillons (30).

26. Entrée de conducteur selon une des revendications 21 à 25, caractérisée en ce que les fentes (26) pour l'introduction des tourillons (30) dans les charnons (28), sont situées du côté dirigé vers la cavité interne (4) de la branche (7) portant les tourillons (30).

27. Entrée de conducteur selon une des revendications 21 à 26, caractérisée en ce que les tourillons (30) sont reliés d'un seul tenant à l'avancée de support (29) de la branche (7).

28. Entrée de conducteur selon une des revendications 21 à 27, caractérisée en ce que la branche (6) pouvant être attachée à la face du boîtier, porte les charnons (28) et l'autre branche (7), à disposer à peu près parallèlement à la face du boîtier, porte les tourillons (30).

29. Entrée de conducteur selon une des revendications 21 à 28, caractérisée en ce que les charnons (28) sont formés d'un seul tenant sur la branche (6) et que cette branche (6) au moins est en matière plastique élastique.

30. Entrée de conducteur selon une des revendications 1 à 29, caractérisée en ce que les tourillons (30) et les charnons (28) sont en prise mutuelle, à la position d'accouplement après l'assemblage, sous l'effet d'une force de frottement et/ou d'une force de retenue susceptible d'être vaincue et les branches (6, 7) peuvent être immobilisées par friction et/ou par des liaisons à cran détachables aux positions désirées de pivotement relatif.

31. Entrée de conducteur selon une des revendications 1 à 30, caractérisée en ce que la section droite des tourillons (30) dépasse légèrement la section intérieure des charnons (28), lesquels sont un peu élastiques, de manière que le pivotement relatif des deux branches soit seulement possible en surmontant un frottement dans le logement.

32. Entrée de conducteur selon une des revendications 1 à 31, caractérisée en ce que les tourillons (30) et/ou la zone de la saillie ou avancée portant les tourillons (30), zone d'où s'étendent les tourillons (30), possèdent une denture et le charnon (28) ou le côté d'extrémité intérieure du charnon possède une denture antagoniste, l'agencement étant tel que les dentures établissent, en position d'utilisation, une liaison à cran détachable.

33. Entrée de conducteur selon une des revendications 1 à 32, caractérisée en ce que les surfaces de contact des deux branches (6, 7) portent des gradins (22) s'ajustant l'un dans l'autre à complémentarité de formes et/ou sont réalisées pour former un assemblage par rainure et languette (23, 24).

34. Entrée de conducteur selon le préambule de la revendication 1, caractérisée en ce qu'un dispositif d'assemblage à encliquetage ou à cran est prévu directement au point de division (5) sur les bords extérieurs des cavités internes (4), lesquelles se raccordent l'une à l'autre à ce point de division (5) lorsque les deux branches (6, 7) occupent la position d'utilisation.

**35.** Entrée de conducteur selon la revendication 34, caractérisée en ce que les moyens d'encliquetage ou à cran du dispositif d'assemblage sur le pourtour des cavités internes (4) des branches (6, 7), sont disposés de façon répartie ou de façon continue tout autour.

**36.** Entrée de conducteur selon une des revendications 1 ou 33 à 35, caractérisée en ce que les gradins (22) de l'assemblage par rainure et languette, prévus sur les surfaces de contact des branches (6, 7), ont des contre-dépouilles telles que ces gradins peuvent être engagés à cran ou avec encliquetage l'un dans l'autre.

**37.** Entrée de conducteur selon une des revendications précédentes, caractérisée en ce que l'un au moins des tourillons (30) peut être déplacé en direction axiale, notamment à l'encontre d'une force de rappel, de manière qu'il pénètre en partie au moins dans la saillie ou avancée (29) de la branche (7) qui le porte, en vue du passage devant lui du charnon (28) lors de l'établissement de l'assemblage à pivotement des deux branches (6, 7).

**38.** Entrée de conducteur selon la revendication 27, caractérisée en ce que les deux tourillons peuvent être déplacés axialement l'un vers l'autre à l'encontre d'une force de rappel.

**39.** Entrée de conducteur selon la revendication 37 ou 38, caractérisée en ce que les deux tourillons, disposés coaxialement et orientés suivant des directions opposées, s'emboîtent en partie télescopiquement par les extrémités dirigées l'une vers l'autre et sont déplaçables, à l'encontre d'une force de rappel, de manière à pénétrer l'un dans l'autre et dans l'avancée (29).

**40.** Entrée de conducteur selon une des revendications 37 à 39, caractérisée en ce qu'un ressort de compression (33) est placé à l'intérieur de l'avancée (29), sur le trajet de déplacement du tourillon (30), pour produire la force de rappel du ou des tourillons axialement déplaçable(s) (30).

EP 0 283 575 B1

Fig.1

Fig.2

24

Fig. 3

Fig. 4

Fig. 5

Fig. 7

Fig. 6

Pf 1

25

Fig.8

24

5

6

23

4

24

7

23

22

6

5

4

7

22

6

A

15

A

B

5

11

7

6a

9

6b

12

8

1

7

C

D

Fig.9

7

4

12

11

Fig. 10

Fig. 11

Fig. 12

Fig. 13

Fig. 14

Fig. 15

Fig. 16

Fig. 19

Fig. 17

Fig. 20

Fig. 18

Fig. 28

Fig.22

Fig.21

Fig.23

Fig.24

Fig.25

Fig.26

Fig.27

Fig.29

Fig.30

Fig.31